# EUROPÄISCHE PATENTSCHRIFT

(11) **EP 4 653 822 B1**
(45) Veröffentlichungstag und Bekanntmachung des Hinweises auf die Patenterteilung: **19.08.2026**
(21) Anmeldenummer: 25178284.3
(22) Anmeldetag: 22.05.2025
(51) Int. Cl.: G01D 18/00, G01D 5/244

(54) **WINKELPOSITIONSGEBER, KALIBRIERVORRICHTUNG SOWIE JUSTIERVORRICHTUNG**
ANGULAR POSITION SENSOR, CALIBRATION DEVICE AND ADJUSTMENT DEVICE
CAPTEUR DE POSITION ANGULAIRE, DISPOSITIF DE CALIBRAGE ET DISPOSITIF DE RÉGLAGE

(30) Priorität: 24.05.2024 DE 102024114642
(43) Veröffentlichungstag der Anmeldung: 26.11.2025
(73) Patentinhaber: Baumer Germany GmbH & Co. KG, 78333 Stockach (DE)
(72) Erfinder: Hanke, Martin, 10319 Berlin (DE)
(74) Vertreter: Strauss, Steffen

(56) Entgegenhaltungen:
- EP-A1- 3 929 062
- DE-A1- 10 041 096
- DE-A1- 102012 219 846

## Beschreibung

Die vorliegende Erfindung betrifft einen Winkelpositionsgeber zum Bestimmen eines Winkelpositionssignals nach Anspruch 1, eine Kalibriervorrichtung zum Erzeugen von Kalibrierdaten nach Anspruch 6 sowie eine Justiervorrichtung zum Erzeugen von Justierdaten für einen Drehgeber nach Anspruch 11.

Drehgeber werden zum Erfassen von Rotationsbewegungen einer Welle eingesetzt und umfassen eine eine Codespur aufweisende Maßverkörperung, die an der rotierbaren Welle festgelegt ist, sowie Erfassungsmittel, die an einer bestimmten Winkelposition relativ zur Welle festgelegt sind und zum Auslesen der Maßverkörperung und/oder der Codespur eingerichtet sind. Der Drehgeber kann somit einen Drehwinkel der Motorwelle erfassen und ein Drehwinkelsignal erzeugen, um den Drehwinkel und die daraus ableitbare Drehbewegung der Motorwelle abzubilden.

Für eine hohe Erfassungsgenauigkeit müssen mechanische Toleranzgrenzen zwischen den Erfassungsmitteln und der mit der Welle rotierenden Maßverkörperung eingehalten werden, die ein aufwändiges Ausrichten der Maßverkörperung relativ zu den Erfassungsmitteln erfordern.

Jedoch kann trotz einer weitgehend präzisen Ausrichtung der Maßverkörperung eine leichte Asymmetrie vorliegen, die durch einen Rundlauffehler der Welle verursacht wird.

Ein möglicher Rundlauffehler kann zu einem Exzentrizitätswinkelfehler führen, falls die Rotationsachse der Maßverkörperung nach der Montage auf der Welle nicht dem ursprünglichen Drehzentrum der in der Maßverkörperung ausgebildeten Codespur entspricht.

Der Exzentrizitätswinkelfehler ist umgekehrt proportional zum Abstand der Erfassungsmittel von der Rotationsachse. Die Erfassungsmittel lesen dabei die Codespur aus. Durch den umgekehrt proportionalen Zusammenhang kann schon eine leichte Verschiebung des Drehzentrums bei kleinen Drehgebern mit Codespuren, die einen kleinen Durchmesser aufweisen, beispielsweise 25mm, häufig zu einem für die Anwendung zu großen Winkelfehler führen. Der Exzentrizitätswinkelfehler ist ein sinusförmiger Winkelfehler und hat eine Periodenlänge über den Drehwinkelbereich einer Umdrehung.

Ein weiterer möglicher Rundlauffehler ist ein Taumelwinkelfehler. Ein Taumelwinkelfehler entsteht, wenn die Maßverkörperung nicht exakt rechtwinklig zur Rotationsachse der Welle ausgerichtet ist und somit eine Planlaufabweichung aufweist.

Der Taumelwinkelfehler ist ein sinusförmiger Winkelfehler und hat eine Periodenlänge über den Drehwinkelbereich einer halben Umdrehung.

Der Exzentrizitätswinkelfehler und der Taumelwinkelfehler sind damit niederfrequente Winkelfehler und werden in der vorliegenden Erfindung als ein erster Winkelfehlertyp des Drehwinkelfehlers bezeichnet.

Zu diesem ersten Winkelfehlertyp können auch andere niederfrequente Winkelfehler gehören, die ein Vielfaches der Frequenz, insbesondere kleiner als die zehnfache Frequenz, des Exzentrizitätswinkelfehlers aufweisen.

Insbesondere kann ein Winkelfehler mit der dreifachen Frequenz des Exzentrizitätswinkelfehlers durch eine leicht verformte Maßverkörperung, beispielsweise aufgrund der Verwendung eines Dreibacken-Futters während der Herstellung, hervorgerufen werden.

Ferner entstehen zusätzlich Fehler eines weiteren Winkelfehlertyps, welche insbesondere höherfrequenter sind bzw. höhere Signalfrequenzen als der erste Winkelfehlertyp aufweisen, beispielsweise durch Inhomogenitäten in der Maßverkörperung und/oder durch die Messwerterfassung der Erfassungsmittel. Hierbei können insbesondere Offset-, Amplituden und/oder Phasenfehler auftreten, dessen Fehlersignalfrequenzen Vielfache der Signalfrequenz der häufig anzutreffenden Inkrementalsignale die durch die Erfassungsmittel beim Auslesen einer periodisch gleichmäßig unterteilten Codespur erzeugt werden können.

Für ein besonders präzises Drehwinkelsignal muss eine Kombination aus präziser Maßverkörperung und sehr genauen Erfassungsmitteln gewählt werden, welche zueinander präzise positioniert werden müssen.

Diese präzise Positionierung ist sehr aufwändig und steigert die Montagekosten.

Um den Einfluss der verschiedenen Winkelfehler zu erkennen, ist es bisher aus dem Stand der Technik bekannt, einen Abgleich mit einem Referenzgeber durchzuführen, um Kalibrierdaten zu erzeugen. Anhand der Kalibrierdaten lässt sich dann eine Aussage über die Signalqualität des Drehgebers treffen.

Ferner ist es auch bekannt solche Kalibrierdaten als Justierdaten im Drehgeber zu hinterlegen, um den negativen Einfluss der Winkelfehler auf das Drehwinkelsignal des Drehgebers aktiv zu korrigieren.

Aus der EP 3 929 062 A1 ist ein Winkelpositionsgeber zum Erfassen des Drehwinkels einer Welle bei einer Rotation um eine erste Rotationsachse bekannt, wobei hierfür eine erste fremdgelagerte Maßverkörperung mittels magnetoresistiven Sensoren und eine zweite eigengelagerte Maßverkörperung mittels optischer Lesemittel ausgelesen wird.

Ferner sind aus dem Stand der Technik die DE 10 2012 219 846 A1 und die DE 100 41 096 A1 bekannt.

Der vorliegenden Erfindung liegt die Aufgabe zugrunde, die aus dem Stand der Technik bekannten Nachteile zu überwinden. Insbesondere ist es Aufgabe der vorliegenden Erfindung eine Möglichkeit zu schaffen, bei minimalem Montageaufwand und somit einer hohen mechanischen Toleranz eine hohe Messgenauigkeit beim Erfassen des Drehwinkels einer Welle insbesondere bei einer Rotationsbewegung zu ermöglichen.

Die Aufgabe wird durch einen erfindungsgemäßen Winkelpositionsgeber gemäß Anspruch 1 gelöst. Ferner wird die Aufgabe durch eine erfindungsgemäße Kalibriervorrichtung nach Anspruch 6 sowie durch eine erfindungsgemäße Justiervorrichtung nach Anspruch 11 gelöst.

Der erfindungsgemäße Winkelpositionsgeber ist zum Erfassen eines Drehwinkels bei einer Rotationsbewegung einer Welle um eine erste Rotationsachse ausgebildet.

Der erfindungsgemäße Winkelpositionsgeber umfasst eine erste Maßverkörperung mit Festlegmitteln, die derart ausgebildet sind, dass die erste Maßverkörperung in einem Festlegzustand mit der Welle starr verbindbar ist, derart, dass die erste Maßverkörperung zusammen mit der Welle um die erste Rotationsachse rotierbar ist.

Der erfindungsgemäße Winkelpositionsgeber umfasst Drehwinkelsensormittel mit Montagemitteln, die so ausgebildet sind, dass die Drehwinkelsensormittel in einem Montagezustand relativ zur ersten Maßverkörperung positionierbar sind, um die Drehwinkelsensormittel in Wirkverbindung zur ersten Maßverkörperung zu bringen.

Die Drehwinkelsensormittel sind so ausgebildet, dass die erste Maßverkörperung auslesbar und wenigstens ein Grobwinkelsignal erzeugbar ist, um den Drehwinkel bei einer Rotationsbewegung der ersten Maßverkörperung um die erste Rotationsachse an wenigstens einer statischen Winkelposition zu erfassen und durch das wenigstens eine Grobwinkelsignal abzubilden.

Bevorzugt sind die Drehwinkelsensormittel so ausgebildet, dass die erste Maßverkörperung an einer ersten Winkelposition ausgelesen werden kann, um ein erstes Grobwinkelsignal zu erzeugen und an einer zweiten Winkelposition ausgelesen werden kann, um ein zweites Grobwinkelsignal zu erzeugen. Die erste Winkelposition und die zweite Winkelposition unterscheiden sich bevorzugt um 180°, um die erste Maßverkörperung in Draufsicht an zwei gegenüberliegenden und/oder um 180° versetzten Positionen auszulesen.

Besonders bevorzugt sind die Drehwinkelsensormittel so ausgebildet, dass die erste Maßverkörperung an einer ersten Winkelposition ausgelesen werden kann, um ein ersten Grobwinkelsignal zu erzeugen und an einer zweiten Winkelposition ausgelesen werden kann, um ein zweites Grobwinkelsignal zu erzeugen und an einer dritten Winkelposition ausgelesen werden kann, um ein drittes Grobwinkelsignal zu erzeugen. Diese Winkelpositionen sind bevorzugt jeweils um 60° voneinander beabstandet, um die erste Maßverkörperung in Draufsicht bei einer Winkelposition von 60°, 120° und 240° auszulesen. Die Festlegmittel sind so ausgebildet, dass sich die erste Maßverkörperung an der Welle, insbesondere lösbar, festlegen lässt. In dem Festlegzustand ist die erste Maßverkörperung mit der Welle fest verbunden. Die erste Maßverkörperung und die Welle sind so miteinander verbunden, dass die Rotationsbewegung der Welle auf die erste Maßverkörperung übertragen wird.

Die erste Maßverkörperung umfasst bevorzugt eine Teilung oder eine Codespur, die von den Drehwinkelsensormitteln lesbar ist. Die Drehwinkelsensormittel sind statisch und/oder stationär und/oder relativbewegbar zur ersten Maßverkörperung - und somit zur Welle - ausgebildet. Mit anderen Worten, die Drehwinkelsensormittel sind zum Zusammenwirken mit der Maßverkörperung an einer ersten Winkelposition ausgebildet, wobei ein Drehwinkel der Welle erfassbar wird. Die Drehwinkelsensormittel sind so eingerichtet, dass ein Grobwinkelsignal zum Abbilden der Rotationsbewegung der Welle erzeugbar ist, um somit insbesondere eine Winkeländerung der Welle zu erfassen

Vorteilhaft kann durch das Grobwinkelsignal ein Rundlauffehler und/oder ein Taumelfehler der Welle erkannt werden. Hierbei ist keine hohe Genauigkeit erforderlich, so dass große Montagetoleranzen vorliegen können.

Der erfindungsgemäße Winkelpositionsgeber umfasst einen Referenzgeber mit einer zweiten Maßverkörperung, mit Verbindungsmitteln, mit Lagermitteln sowie mit Sensormitteln, wobei die Verbindungsmittel so ausgebildet sind, dass die zweite Maßverkörperung zumindest in einem Kupplungszustand mit der ersten Maßverkörperung drehstarr verbunden ist, derart, dass eine Rotationsbewegung der ersten Maßverkörperung zu einer über die Lagermittel definierten Rotationsbewegung der zweiten Maßverkörperung um eine zweite Rotationsachse führt.

Dabei sind zusätzlich die Sensormittel zumindest in einem Kupplungszustand mit den Drehwinkelsensormitteln drehstarr verbunden.

Die Sensormittel sind derart ausgebildet, dass im Kupplungszustand die zweite Maßverkörperung auslesbar und ein Referenzfeinwinkelsignal erzeugbar ist, um den Drehwinkel der Rotationsbewegung der zweiten Maßverkörperung zu erfassen und durch das Referenzfeinwinkelsignal abzubilden.

Die zweite Maßverkörperung umfasst bevorzugt eine Teilung oder eine Codespur, die von den Sensormitteln lesbar ist. Die Sensormittel sind statisch und/oder stationär und/oder relativbewegbar zur zweiten Maßverkörperung ausgebildet. Mit anderen Worten, die Sensormittel sind zum Zusammenwirken mit der zweiten Maßverkörperung an einer festen Winkelposition ausgebildet.

Durch die Lagermittel ist es möglich eine sehr präzise Positionierung der Sensormittel gegenüber der zweiten Maßverkörperung zu realisieren, wodurch ein präzises Referenzfeinwinkelsignal ermöglicht wird, welches im Wesentlichen den Drehwinkel um die zweite Rotationsachse angibt.

Die eingesetzten Verbindungsmittel ermöglichen einen einfachen und schnellen Übergang in den Kupplungszustand. Mit anderen Worten ermöglichen die Verbindungsmittel eine einfache und schnelle Montage.

In dem Kupplungszustand ist ein Drehwinkel der zweiten Maßverkörperung und somit auch der Welle, erfassbar. Die Sensormittel sind so eingerichtet, dass ein Referenzfeinwinkelsignal zum Abbilden des Drehwinkels der Rotationsbewegung der Welle um die erste Rotationsachse erzeugbar ist.

Im Kupplungszustand können Abweichungen zwischen der ersten Rotationsachse und der zweiten Rotationsachse auftreten, die zu dem ersten Winkelfehlertyp bezogen auf den Drehwinkel der Welle, insbesondere zu einem Exzentrizitäts- oder Taumelwinkelfehler, führen können.

Das Grobwinkelsignal und/oder das Referenzgrobwinkelsignal weist bevorzugt eine niedrigere Auflösung als das Referenzfeinwinkelsignal auf. Das Grobwinkelsignal und/oder das Referenzgrobwinkelsignal und/oder das Referenzfeinwinkelsignal sind bevorzugt digitale zeit- und wertdiskrete Signale, die die jeweiligen Drehwinkel innerhalb einer Umdrehung angeben.

Weiterhin bevorzugt sind das Grobwinkelsignal und/oder das Referenzgrobwinkelsignal und/oder das Referenzfeinwinkelsignal analoge sinusförmige Signale, insbesondere als Paare von Sinus- und Cosinus-Spurteilsignalen ausgebildet, welche zusammen zusätzlich eine Quadraturinformation codieren und die nach aus dem Stand der Technik bekannten Verfahren weiterverarbeitet werden, insbesondere durch eine Analog-zu-Digital-Umsetzung und Winkelberechnungen durch Anwendung von ATAN2-Funktionen.

Der erfindungsgemäße Winkelpositionsgeber umfasst auch Korrekturmittel, die so ausgebildet sind, dass aus dem wenigstens einen Grobwinkelsignal auf Grundlage einer Rechenvorschrift ein Referenzgrobwinkelsignal bestimmbar ist, das um einen ersten Typ eines Drehwinkelfehlers, also um den ersten Winkelfehlertyp, korrigiert ist. Der erste Typ des Drehwinkelfehlers und/oder der erster Winkelfehlertyp wird insbesondere durch einen Exzentrizitätswinkelfehler und/oder einen Taumelwinkelfehler bestimmt.

Bevorzugt umfasst diese Rechenvorschrift zum Abgleich eines Exzentrizitätswinkelfehlers das aus der EP 3 839 442 B1 bekannte Korrekturverfahren zur Reduzierung des Exzentrizitätswinkelfehler, wobei phi_1 das erste Grobwinkelsignal der Drehwinkelsensormittel zu einem bestimmten Zeitpunkt und phi_grob eine Hilfsgröße und/oder das fehlerbereinigte Referenzgrobwinkelsignal darstellt.

Weiterhin bevorzugt sind die Drehwinkelsensormittel so ausgebildet, dass ein Paar von Spurteilsignalen, insbesondere ein Sinus- und ein Cosinus-Spurteilsignal, erzeugt wird, wobei die Spurteilsignale zueinander eine Phasenverschiebung aufweisen und damit zusätzlich eine Quadraturinformation codieren und das Grobwinkelsignal ausbilden.

Die Erzeugung der Sinus- und Cosinus-Spurteilsignale erfolgt beispielsweise innerhalb der Drehwinkelsensormittel durch einer erste Sensoreinheit und eine zweite Sensoreinheit, die zueinander durch eine bauartbestimmte Sensordistanz beabstandet sind und die die erste Maßverkörperung auslesen. Die in diesem Zusammenhang in der ersten Maßverkörperung ausgebildete Codespur sowie die bauartbestimmte Sensordistanz sind hierbei zueinander so eingerichtet, dass eine definierte Phasenverschiebung der Sinus- und Cosinus-Spurteilsignale von insbesondere 90° bei optimalem Abstand der ersten Rotationsachse zu den Drehwinkelsensormitteln erzeugbar ist.

Das durch die Sinus- und Cosinus-Spurteilsignale codierte Grobwinkelsignal kann durch eine Analog-zu-Digital-Umsetzung und einer anschließenden Winkelberechnung durch eine ATAN2-Funktion in ein digitales und somit zeit- und wertdiskretes Signal umgewandelt werden.

Bevorzugt umfasst die in diesem Zusammenhang von den Korrekturmitteln umfasste Rechenvorschrift eine Ermittlung einer Abweichung einer gemessenen Phasendifferenz der Sinus- und Cosinus-Spurteilsignale zur definierten Phasenverschiebung, um daraus, insbesondere durch eine Integration, ein Korrektursignal für das Grobwinkelsignal zu bestimmen, um im Ergebnis das Referenzgrobwinkelsignal zu ermitteln.

In einer bevorzugten Weiterbildung sind die Drehwinkelsensormittel so ausgebildet, dass wenigstens ein zweites Grobwinkelsignal durch das Auslesen der ersten Maßverkörperung an einer zweiten Winkelposition erzeugbar ist.

Ferner ist es in diesem Zusammenhang bevorzugt vorgesehen, dass die Korrekturmittel so ausgebildet sind, dass die Rechenvorschrift beim Bestimmen des Referenzgrobwinkelsignal das wenigstens zweite Grobwinkelsignal zusätzlich verarbeitet.

Anders ausgedrückt, die zweite Winkelposition unterscheidet sich von der ersten Winkelposition, um die erste Maßverkörperung an einer ersten Winkelposition und zusätzlich an wenigstens einer zweiten Winkelposition auszulesen. Der Drehwinkel der Welle lässt sich somit bevorzugt an zwei Winkelpositionen, besonders bevorzugt an zwei gegenüberliegenden Winkelpositionen, insbesondere bei 0° und bei 180° erfassen und durch ein erstes und ein zweites Grobwinkelsignal abbilden.

Besonders bevorzugt umfassen die Drehwinkelsensormittel eine erste Drehwinkelsensoreinheit, um das erste Grobwinkelsignal zu erzeugen und wenigstens eine zweite Drehwinkelsensoreinheit, um das wenigstens zweite Grobwinkelsignal zu erzeugen.

Zudem ist es besonders bevorzugt, wenn der Drehwinkel der Welle an drei unterschiedlichen Winkelpositionen und somit besonders bevorzugt in Draufsicht auf die erste Maßverkörperung bei 0°, bei 60° und bei 120° von den Drehwinkelsensormitteln erfassbar ist und durch ein erstes, ein zweites und ein drittes Grobwinkelsignal abgebildet wird.

Besonders bevorzugt umfassen die Drehwinkelsensormittel in diesem Zusammenhang eine erste Drehwinkelsensoreinheit, um ein erstes Grobwinkelsignal zu erzeugen, eine zweite Drehwinkelsensoreinheit, um ein zweites Grobwinkelsignal zu erzeugen sowie eine dritte Drehwinkelsensoreinheit, um ein drittes Grobwinkelsignal zu erzeugen.

Die Korrekturmittel und/oder die Rechenvorschrift umfassen in diesem Zusammenhang insbesondere den folgenden Aufbau, wobei phi_1 den zeitlichen Verlauf des ersten Grobwinkelsignals und phi_2 den zeitlichen Verlauf des zweiten Grobwinkelsignals ausbildet.

Ferner gilt im Folgenden für das erste Grobwinkelsignal phi_1 = phi₁ und für das das zweite Grobwinkelsignal phi_2 = phi₂. Für das Referenzgrobwinkelsignal phi_grob gilt: $phi_grob = \frac{{phi}_{1} + {phi}_{2} - 180 °}{2} ,$ wobei für die erste Winkelposition des ersten Grobwinkelsignals α_1 = 0° und für die zweite Winkelposition α_2 des zweiten Grobwinkelsignals α_2 = 180° gilt.

Somit ergibt sich für das Referenzgrobwinkelsignal phi_grob $phi_grob = \frac{{phi}_{1} + {phi}_{2} - α _ 2}{2}$

Bei der Addition von Drehwinkelsignalen, insbesondere des ersten Grobwinkelsignals phi_1 und des zweiten Grobwinkelsignals phi_2, soll der jeweilige Überlauf der Signale beachtet werden, damit sich keine unerwünschten Sprünge im resultierenden Signal ergeben.

Beispielsweise können die einzelnen Grobwinkelsignale vor dem Anwenden der Rechenvorschrift beim Auftreten eines Überlaufs durch Addition bzw. Subtraktion von 360° so erweitert werden, dass kein Überlauf während der Berechnung auftritt. Alternativ kann jeweils eine Winkelgeschwindigkeit berechnet werden und diese jeweiligen Winkelgeschwindigkeiten addiert und skaliert werden. Durch eine Integration mit Beachtung der Startbedingung von phi_1 kann daraus wiederum das Referenzgrobwinkelsignal phi_grob berechnet werden.

In diesem Zusammenhang wird darauf hingewiesen, dass die zweite Winkelposition des zweiten Grobwinkelsignals auch beliebig gewählt werden kann, wobei dann beim Bestimmen des Referenzgrobwinkelsignals harmonische Fehler mittels dem folgenden Additionstheorem: $cos \left(x\right) - cos \left(y\right) = - 2 sin \frac{x + y}{2} sin \frac{x - y}{2}$ und unter Einbeziehung des Winkelabstandes der beiden Winkelpositionen korrigiert werden kann.

Wird die Rotationsbewegung der Welle nicht nur durch ein ersten Grobwinkelsignal und ein zweites Grobwinkelsignal, sondern auch durch ein drittes Grobwinkelsignal ausgedrückt, gilt der folgende Zusammenhang. Die Drehwinkelsensormittel sind in diesem Zusammenhang so ausgebildet, dass das Auslesen der ersten Maßverkörperung entlang des Umfangs der Welle gleichmäßig verteilt erfolgt.

Für die erste Winkelposition des ersten Grobwinkelsignals gilt somit α_1 = 0°, für die zweite Winkelposition des zweiten Grobwinkelsignals gilt α_2 = 120° und für die dritte Winkelposition des dritten Grobwinkelsignals gilt α_3 = 240°.

Es wird darauf hingewiesen, dass wiederum phi_1 = phi₁, phi_2 = phi₂ und phi_3 = phi₃ gilt. Für das fehlerbereinigte Referenzgrobwinkelsignal phi_grob gilt somit: $phi_grob = \frac{{phi}_{1} + {phi}_{2} - α _ 2 + {phi}_{3} - α _ 3}{3}$

Hierbei ist phi_1 das erste Grobwinkelsignal, phi_2 das zweite Grobwinkelsignal und phi_3 das dritte Grobwinkelsignal.

Wird die Rotationsbewegung der Welle nicht nur über das erste, zweite und dritte Grobwinkelsignal, sondern zusätzlich auch über ein viertes Grobwinkelsignal erfasst, gilt der folgende Zusammenhang, wobei die Drehwinkelsensormittel wiederum in Umfangsrichtung gleichmäßig verteilt die erste Maßverkörperung auslesen.

Für die erste Winkelposition gilt somit α_1 = 0°, für die zweite Winkelposition gilt α_2 = 180°, für die dritte Winkelposition gilt α_3 = 90° und für die vierte Winkelposition gilt α_4 = 270°.

Wiederum gilt phi_1 = phi₁, phi_2 = phi₂, phi_3 = phi₃ und phi_4 = phi₄ gilt.

Für das fehlerbereinigte Referenzgrobwinkelsignal phi_grob gilt somit: $phi_grob = \frac{{phi}_{1} + {phi}_{3} - α _ 3 + {phi}_{2} - α _ 2 + phi_ 4 - α _ 4}{4}$

Hierbei ist phi_1 das erste Grobwinkelsignal, phi_2 das zweite Grobwinkelsignal, phi_3 das dritte Grobwinkelsignal und phi_4 das vierte Grobwinkelsignal.

Ferner ist es bevorzugt, die Konstanten α_2 und/oder α_3_und/oder α_4 messtechnisch zu bestimmen, derart, dass, wenn das erste Grobwinkelsignal phi_1 den Wert Null annimmt, die zu diesem Zeitpunkt gemessenen Winkelpositionen phi_2 als Wert für α_2 und/oder phi_3 als Wert für für α_3 und/oder phi_4 als Wert für α_4 genutzt werden. Mit anderen Worten ist bei dieser Ausprägung phi_grob gleich Null, wenn phi_1 Null ist.

Das fehlerbereinigte Referenzgrobwinkelsignal phi_grob ist somit im Wesentlichen von Drehwinkelfehlern des ersten Winkelfehlertyps bezogen auf die Welle befreit. Aufgrund der größeren Lagetoleranzen zwischen den Drehwinkelsensormitteln und der ersten Maßverkörperung weisen jedoch die Grobwinkelsignale und damit auch das fehlerbereinigte Referenzgrobwinkelsignal häufig störende Drehwinkelfehler des weiteren Winkelfehlertyps auf.

Das Referenzfeinwinkelsignal phi_fein ist dagegen ein präzises Drehwinkelsignal, welches jedoch häufig Drehwinkelfehler des ersten Typs bezogen auf die Welle aufweist.

Der erfindungsgemäße Winkelpositionsgeber umfasst zudem Positionsbestimmungsmittel zum Bestimmen und Ausgeben eines Positionsausgangssignals, wobei die Positionsbestimmungsmittel so ausgebildet sind, dass das Positionsausgangssignal aus dem Referenzfeinwinkelsignal und dem Referenzgrobwinkelsignal gemäß einer weiteren Rechenvorschrift bestimmbar ist. Die weitere Rechenvorschrift umfasst daher die folgenden Schritte:
Das Fehlersignal e zwischen dem Referenzfeinwinkelsignal phi_fein und dem Referenzgrobwinkelsignal phi_grob lässt sich wie folgt bestimmen: $e = phi_fein - phi_grob$

Bei dem Fehlersignal e lassen sich die jeweiligen spezifischen Fehler, insbesondere des ersten Winkelfehlertyps und des weiteren Winkelfehlertyps, von phi_fein und/oder von phi_grob bezogen auf den Drehwinkel der Welle, insbesondere im Frequenzbereich, trennen.

Dies wird gemäß einer erfindungsgemäßen Alternative durch die Anwendung eines Filters, insbesondere eines Tiefpassfilters, technisch umgesetzt, um die Drehwinkelfehler des ersten Winkelfehlertyps zu erhalten.

Das Positionsausgangssignal phi_pos ergibt sich dann aus der folgenden Differenz: $phi_pos = phi_fein - e_filt ,$ wobei e_filt das gefilterte, insbesondere tiefpassgefilterte, Fehlersignal e ist und damit im Wesentlichen dem Drehwinkelfehler ersten Winkelfehlertyps darstellt.

Statt eines Filters oder einer DFT können auch aus dem Drehwinkelfehlerspektrum Frequenz, Amplitude und Phase verschiedener sinusförmiger Drehwinkelfehler gewonnen werden. Diese können wiederum durch eine inverse DFT bzw. durch Anwendung von Winkelfunktionen zurücktransformiert werden um e_filt zu erhalten und somit die Differenz von phi_fein und e_filt zu bestimmen.

Weiterhin werden in einer ersten erfindungsgemäßen Alternative Sensorfusionsalgorithmen, insbesondere ein Kalman-Filter, oder ein Beobachter angewendet, um das Positionsausgangssignal phi_pos aus dem Referenzfeinwinkelsignal phi_fein und dem Referenzgrobwinkelsignal phi_grob zu erzeugen.

Bevorzugt wird auf das Positionsausgangssignal vor der Ausgabe ein weiterer Tiefpassfilter angewendet, der höherfrequente Signalanteile, die aufgrund ihrer Frequenz nicht durch die Bewegung der Welle hervorgerufen werden können, aus dem Positionsausgangssignal entfernt.

Weiterbildend ist es in diesem Zusammenhang bevorzugt, wenn das gefilterte Fehlersignal e_filt insbesondere als Stützstellen, bevorzugt als drehwinkelabhängige Stützstellen in einer Tabelle, insbesondere in einer Look-Up-Tabelle, oder über die Angabe von Betrag und Phase bestimmter sinusförmiger Fehler, insbesondere Harmonischer in Bezug auf eine Umdrehung, hinterlegt ist.

In diesem Zusammenhang wird darauf hingewiesen, dass die Bestimmung des Fehlersignals und/oder des gefilterten Fehlersignals kontinuierlich im Betrieb durchgeführt werden kann oder auch eine zeitliche begrenzte Bestimmung, um das entsprechende Fehlersignal einzulernen, insbesondere nach einem Kupplungsvorgang erfolgen kann. Im Falle einer zeitlich begrenzten Bestimmung wird das gelernte Fehlersignal nach der Bestimmung nur angewendet. Eine kontinuierliche Bestimmung kann dann jedoch weiterhin zu Kontrollzwecken erfolgen.

Die Look-Up Tabelle enthält eine festgelegte und/oder vorbestimmt Anzahl diskreter Einzelwerte pro Vollumdrehung. Jeder diskrete Einzelwert bildet somit einen Korrekturwert für einen Teilwinkelbereich des Referenzfeinwinkelsignals ab. Die jeweiligen Einzelwerte der Drehwinkelteilbereiche können durch eine Interpolation, insbesondere durch "nearest neighbour" bzw. "nächste Nachbarn" oder eine lineare Interpolation, aus dem Fehlersignal e_filt bestimmt werden.

Ferner ist es bevorzugt, wenn das Fehlersignal e zwischen dem Referenzfeinsignal phi_fein und dem fehlerbereinigten Referenzgrobsignal phi_grob alternativ durch das Bestimmen des Mittelwerts mean von der Differenz des Referenzfeinsignals und des fehlerbereinigten Referenzgrobsignals wie folgt bestimmt wird: $e = \left(phi_fein-phi_grob\right) - mean \left(phi_fein-phi_grob\right) .$

**In vorteilhafter** Weise lassen sich bei einer solchen Umsetzung und/oder weiten Rechenvorschrift Montagetoleranzen der Drehwinkelsensormittel in Bezug auf die einzelnen Winkelpositionen ausgleichen. Somit kommt es nicht zu einer negativen Beeinflussung, für den Fall, dass die erste und/oder die zweite und/oder die dritte und/oder die vierte Winkelpositionen nicht der angenommenen Soll-Winkelposition von 90° und/oder 180° und/oder 120° und/oder 240° entspricht.

Entsprechend ist es bei der Anwendung des Mittelwerts mean nicht notwendig die statischen Winkeloffsets, α_2, α_3, α_4 der Drehwinkelsensormittel bei der Berechnung von phi_grob zu berücksichtigen. Weiterhin ist es bevorzugt vorgesehen, dass die Rechenvorschrift und/oder die weitere Rechenvorschrift mehrstufig und/oder mehrere Schritte umfasst. Besonders bevorzugt ist es, wenn die Rechenvorschrift und/oder die weitere Rechenvorschrift zweistufig aufgebaut und/oder implementiert ist.

Die Verbindungsmittel sind insbesondere so ausgebildet, dass der Referenzgeber flexibel und drehstarr mit der ersten Maßverkörperung gekoppelt werden kann. Bevorzugt umfassen die Verbindungsmittel eine Kupplung und eine Drehmomentstütze. Die Kupplung verbindet bevorzugt die erste Maßverkörperung mit der zweiten Maßverkörperung. Die Drehmomentstütze verbindet bevorzugt die Sensormittel mit einer Gehäuseeinheit und/oder den Drehwinkelsensormitteln. Besonders bevorzugt ist die Kupplung drehstarr, jedoch flexibel, insbesondere als Balgkupplung und die Drehmomentstütze starr ausgebildet. Alternativ kann es auch vorgesehen sein, dass die Kupplung starr und die Drehmomentstütze drehstarr, jedoch flexibel ausgebildet ist. Ganz besonders bevorzugt sind die Verbindungsmittel lösbar ausgebildet. Vorteilhaft kann die Referenzgeber und/oder die erste Maßverkörperung somit als separate Einheit ausgebildet sein und somit nachträglich, insbesondere über lösbare Kupplungsmittel, insbesondere über eine Klauenkupplung, und/oder eine lösbare Drehmomentstütze gekoppelt werden.Im Ergebnis wurde im Rahmen der vorliegenden Erfindung erkannt, dass durch die Kombination einer ersten Maßverkörperung, die fremdgelagert ist, und einer zweiten Maßverkörperung, die eigengelagert ist, und somit beim Erfassen des Drehwinkels bei einer Drehbewegung der Welle durch das Referenzgrobwinkelsignal und das Referenzfeinwinkelsignal bei minimalem Montageaufwand eine hohe Messgenauigkeit erzielbar ist.

Erfindungsgemäße lassen sich nämlich Asymmetrien in der Rotationsbewegung der Welle, und somit insbesondere der Einfluss verschiedener Winkelfehler, insbesondere eines Rundlauf- und/oder Taumelwinkelfehlers, trotz Vorliegen großer mechanischer Toleranzen erkennen und korrigieren.

Um dabei eine präzise und somit genaue Erfassung des Drehwinkels von der Rotationsbewegung der Welle zu ermöglichen, wird zusätzlich das Referenzfeinpositionssignal genutzt.

Vorteilhafte Weiterbildungen der Erfindung sind in den Unteransprüchen beschrieben. In den Rahmen der Erfindung fallen sämtliche Kombinationen aus zumindest zwei von in der Beschreibung, den Ansprüchen und/oder den Figuren offenbarten Merkmalen.

Bei einer bevorzugten Ausgestaltung sind die Festlegmittel als ein Spannfutter zum Festlegen der ersten Maßverkörperung auf der Welle oder als eine Spannzange zum Festlegen der ersten Maßverkörperung auf der Welle ausgebildet sind und/oder dass das Spannfutter oder die Spannzange selbstzentrierend ausgebildet sind und/oder dass das Spannfutter oder die Spannzange mittels umfasster Stellmittel automatisch, insbesondere pneumatisch oder elektrisch, bedienbar ist.

Vorteilhaft kann somit auch die Montage der ersten Maßverkörperung an die Welle vereinfacht werden.

Die Festlegmittel umfassen bevorzugt lösbare mechanische Wellenadapter, die ein Zusammenwirken der Festlegmittel mit unterschiedlichen Wellen ermöglicht.

Weiterbildend ist es bevorzugt vorgesehen, wenn die Montagemittel und/oder die Festlegmittel so ausgebildet sind, dass ein Radialabstand und ein Axialabstand zwischen der ersten Maßverkörperung und den Drehwinkelsensormitteln beeinflussbar und/oder festlegbar ist. In diesem Zusammenhang sind bevorzugt Einstellmittel vorgesehen, um somit die Drehwinkelsensormittel in Bezug auf die festgelegte erste Maßverkörperung auszurichten.

Diese Einstellmittel sind besonders bevorzugt durch einen mechanischen Anschlag in Zusammenwirkung mit einem Federmechanismus ausgebildet. Dies ist insbesondere dann hilfreich, wenn die erste Maßverkörperung lösbar und somit als separate Einheit ausgebildet ist.

Die Montagemittel sind bevorzugt ausgebildet als ein Flansch zum Zusammenwirken mit einer Flanschaufnahme, die von einem Gehäuseteil, das die Welle umgibt, bereitgestellt wird.

Die Montagemittel umfassen bevorzugt lösbare mechanische Adapterelemente, die ein Zusammenwirken der Montagemittel mit unterschiedlichen Gehäuseteilen ermöglichen.

Die Montagemittel sind besonders bevorzugt ausgebildet als ein Passstift zum Zusammenwirken mit einer Stiftaufnahme, die von einem Gehäuseteil, das die Welle umgibt, bereitgestellt wird.

Ferner ist es bevorzugt, dass die Montagemittel eine Schiene umfassen, wobei die Schiene die Drehwinkelsensormittel sowie die Welle, insbesondere ein die Welle umgebenes Gehäuse, ausrichten und somit zueinander positionieren.

Weiterbildend ist es vorgesehen, dass die erste Maßverkörperung als magnetische Maßverkörperung ausgebildet ist und die Drehwinkelsensormittel als wenigstens ein magnetfeldempfindlicher Sensor, insbesondere als wenigstens ein AMR- und/oder TMR-Sensor, ausgebildet sind.

Ferner wird darauf hingewiesen, dass die Drehwinkelsensormittel wenigstens einen AMR- oder TMR- Sensor umfassen und/oder dass die erste Drehwinkelsensoreinheit und/oder die zweite Drehwinkelsensoreinheit und/oder die dritte Drehwinkelsensoreinheit und/oder die vierte Drehwinkelsensoreinheit durch jeweils einen AMR oder TMR -Sensor ausgebildet ist.

Bei dieser bevorzugten Realisierungsform ist die erste Maßverkörperung dann auch als eine magnetische Maßverkörperung mit einer Vielzahl an magnetischen Polen ausgebildet.

Vorteilhaft ist in diesem Zusammenhang, dass der optimale Luftspalt, also insbesondere der Radialabstand zwischen der ersten Maßverkörperung und dem wenigstens einen AMR- und/oder TMR- Sensor, im Wesentlichen der halben Polbreite der magnetischen Maßverkörperung entspricht. Eine solche magnetische Ausführungsform ist besonders anbautolerant und somit unempfindlich hinsichtlich des Radialabstands und/oder ermöglicht auch einen vergleichsweise großen, maximal zulässigen Radialabstands, da insbesondere Polbreiten von einigen Millimetern, beispielsweise 2mm oder 5mm, möglich sind. Somit kann insbesondere der Radialabstand bei einer 5mm-Polbreite 2,5mm +/-2mm betragen und ermöglicht eine große mechanische Toleranz.

Ferner ist in diesem Zusammenhang auch vorteilhaft, dass die axiale Anbautoleranz - und somit der maximal zulässige Axialabstand - unmittelbar durch die Breitenerstreckung der ersten Maßverkörperung, insbesondere durch die Polradbreite, welche beispielsweise 20mm betragen kann, bestimmt und somit im Rahmen der Fertigung festgelegt wird.

Zusammenfassend erlaubt die Umsetzung der Drehwinkelsensormittel durch wenigstens einen AMR- und/oder TMR- Sensor besonders große mechanische Toleranzen, weshalb ein schnelles bzw. unpräzises Aufstecken der ersten Maßverkörperung und somit eine unpräzise Relativpositionierung zwischen der ersten Maßverkörperung und den Drehwinkelsensormitteln möglich ist.

Ferner umfasst die vorliegende Erfindung auch eine Kalibriervorrichtung zum Erzeugen von Kalibrierdaten für einen Drehgeber. Der Drehgeber, der durch die erfindungsgemäße Kalibriervorrichtung kalibriert werden soll, umfasst eine eigene Maßverkörperung, die auf einer Welle festgelegt ist und Erfassungsmittel zum Lesen dieser Maßverkörperung. Die Erfassungsmittel sind so ausgebildet, dass ein Drehwinkelsignal, das im Folgenden als Drehwinkeleingangssignal bezeichnet wird, zum Abbilden des Drehwinkels der Welle bei einer Rotationsbewegung um die erste Rotationsachse erzeugbar ist.

Die erfindungsgemäße Kalibriervorrichtung umfasst eine erste Maßverkörperung mit Festlegmitteln, die so ausgebildet sind, dass die erste Maßverkörperung in einem Festlegzustand mit der Welle starr verbindbar ist, derart, dass die erste Maßverkörperung um die erste Rotationsachse rotierbar ist

Weiterhin umfasst die erfindungsgemäße Kalibriervorrichtung Drehwinkelsensormittel mit Montagemitteln. Die Montagemittel sind so ausgebildet, dass die Drehwinkelsensormittel in einem Montagezustand relativ zur ersten Maßverkörperung positionierbar sind, um die Drehwinkelsensormittel in Wirkverbindung zur ersten Maßverkörperung zu bringen.

Erfindungsgemäß sind die Drehwinkelsensormittel so ausgebildet, dass die erste Maßverkörperung an wenigstens einer Winkelposition auslesbar ist, um wenigstens ein Grobwinkelsignal zu erzeugen. Das Grobwinkelsignal beschreibt den zeitlichen Verlauf der Rotationsbewegung der ersten Maßverkörperung und bildet somit die Rotationsbewegung der Welle um die erste Rotationsachse aus.

Weiterhin umfasst die erfindungsgemäße Kalibriervorrichtung einen Referenzgeber mit einer zweiten Maßverkörperung, Verbindungsmitteln, Lagermitteln sowie Sensormitteln.

Die Verbindungsmittel sind erfindungsgemäß so ausgebildet, dass die zweite Maßverkörperung zumindest in einem Kupplungszustand mit der ersten Maßverkörperung drehstarr verbunden ist. Drehstarr verbunden bedeutet in diesem Zusammenhang, dass eine Rotationsbewegung der ersten Maßverkörperung zu einer über die Lagermittel definierten Rotationsbewegung der zweiten Maßverkörperung um eine zweite Rotationsachse führt.

Die Sensormittel sind erfindungsgemäß zum Auslesen der zweiten Maßverkörperung eingerichtet. Die drehstarre Kopplung der ersten Maßverkörperung mit der zweiten Maßverkörperung im Kupplungszustand führt dazu, dass die Drehbewegung der Welle um die erste Drehachse von den Sensormitteln durch das Auslesen der zweiten Maßverkörperung erfasst werden kann. Die Drehbewegung der Welle kann somit durch das Referenzfeinwinkelsignal abgebildet werden.

Der erfindungsgemäße Winkelpositionsgeber umfasst auch Korrekturmittel, die so ausgebildet sind, dass aus dem wenigstens einen Grobwinkelsignal auf Grundlage einer Rechenvorschrift ein Referenzgrobwinkelsignal bestimmbar ist, das um einen ersten Typ eines Drehwinkelfehlers, also um den ersten Winkelfehlertyp, korrigiert ist. Der erste Typ des Drehwinkelfehlers und/oder der erster Winkelfehlertyp wird insbesondere durch einen Exzentrizitätswinkelfehler und/oder einen Taumelwinkelfehler bestimmt.

Hinsichtlich der Bestimmung des Referenzgrobsignals wird auf die Ausführungen des Winkelpositionsgebers verwiesen, die somit auch uneingeschränkt für die erfindungsgemäße Kalibriervorrichtung und/oder die erfindungsgemäße Justiervorrichtung gelten.

Weiterhin umfasst die erfindungsgemäße Kalibriervorrichtung Kommunikationsmittel, die mit dem Drehgeber signaltechnisch verbindbar sind, um das wenigstens eine Drehwinkeleingangssignal zu empfangen.

Die erfindungsgemäße Kalibriervorrichtung umfasst zudem Kalibriermittel, die so eingerichtet sind, dass die Kalibrierdaten aus dem Drehwinkeleingangssignal phi_in, dem wenigstens einen Referenzgrobwinkelsignal phi_grob sowie dem Referenzfeinwinkelsignal phi_fein bestimmbar sind.

Die Kalibriermittel sind gemäß einer bevorzugten Weiterbildung so ausgebildet, dass ein Zwischenreferenzwinkelsignal phi_ref aus dem Referenzgrobwinkelsignal phi_grob und dem Referenzfeinwinkelsignal phi_fein erzeugbar ist, wobei in diesem Zusammenhang auf die Ausführungen zum Bestimmen des Positionsausgangssignals phi_pos und des gefilterten Fehlersignals e_filt des erfindungsgemäßen Winkelpositionsgebers verwiesen wird. Das Zwischenreferenzwinkelsignal phi_ref entspricht hierbei dem Positionsausgangssignals phi_pos und ergibt sich aus der folgenden Differenz: $phi_ref = phi_fein - e_filt ,$ wobei e_filt das gefilterte, insbesondere tiefpassgefilterte, Fehlersignal e = phi_fein - phi_grob ist und damit im Wesentlichen dem Drehwinkelfehler ersten Winkelfehlertyps darstellt.

Die Kalibrierdaten k ergeben sich in dieser Weiterbildung durch die Differenz des Drehwinkeleingangssignal phi_in und des Zwischenreferenzwinkelsignals phi_ref: $k = phi_in - phi_ref$

Aus wird darauf hingewiesen, dass die Reihenfolge der Rechenschritte variieren kann.

Die erfindungsgemäßen Verbindungsmittel sind im Rahmen der vorliegenden Erfindung - und somit hinsichtlich des erfindungsgemäßen Winkelpositionsgebers und/oder der erfindungsgemäßen Kalibriervorrichtung und/oder der erfindungsgemäßen Justiervorrichtung- so ausgebildet, dass der Referenzgeber flexibel und drehstarr mit der ersten Maßverkörperung gekoppelt werden kann.

Bei einer bevorzugten Ausführungsvariante umfassen die Verbindungsmittel eine Kupplung und eine Drehmomentstütze. Die Kupplung verbindet bevorzugt die erste Maßverkörperung mit der zweiten Maßverkörperung. Die Drehmomentstütze verbindet bevorzugt die Sensormittel mit einer Gehäuseeinheit und/oder den Drehwinkelsensormitteln.

Bei einer ersten Ausführungsvariante ist die Kupplung drehstarr sowie flexibel und die Drehmomentstütze starr ausgebildet.

Bei einer alternativen Ausführungsvariante ist die Kupplung starr und die Drehmomentstütze drehstarr, jedoch flexibel ausgebildet.

Ganz besonders bevorzugt sind die Verbindungsmittel lösbar ausgebildet. Vorteilhaft kann die Referenzgeber und/oder die erste Maßverkörperung somit als separate Einheit ausgebildet sein und somit nachträglich, insbesondere über lösbare Kupplungsmittel und/oder eine lösbare Drehmomentstütze gekoppelt werden.

Zudem gelten auch die Ausführungen im Zusammenhang des Winkelpositionsgebers uneingeschränkt auf die hier beschriebene Kalibriervorrichtung sowie die später noch im Detail erläuterte Justiervorrichtung.

Weiterbildend umfasst die erfindungsgemäße Kalibriervorrichtung und/oder Justiervorrichtung eine Datenschnittstelle zum Übermitteln der Kalibrierdaten und/oder Justierdaten an eine externe Steuereinheit und/oder zum Empfangen von Steueranweisungen, insbesondere zum Starten eines Kalibriervorgangs mittels der erfindungsgemäßen Kalibriervorrichtung und/oder zum Starten eines Justiervorgangs mittels einer erfindungsgemäßen Justiervorrichtung.

In einer bevorzugten Ausführungsform können die Kalibrierdaten k als Stützstellen, bevorzugt als drehwinkelabhängige Stützstellen in einer Tabelle, insbesondere in einer Look-Up-Tabelle, oder über die Angabe von Betrag und Phase bestimmter sinusförmiger Fehler, insbesondere Harmonischer in Bezug auf eine Umdrehung, aufbereitet werden, um dann über die Datenschnittstelle an die externe Steuereinheit übertragen zu werden.

Die Look-Up Tabelle enthält eine festgelegte und/oder vorbestimmte Anzahl diskreter Einzelwerte pro Vollumdrehung. Jeder diskrete Einzelwert bildet somit einen Korrekturwert für einen Teilwinkelbereich des Referenzfeinwinkelsignals ab. Die jeweiligen Einzelwerte der Drehwinkelteilbereiche können durch eine Interpolation, insbesondere durch "nearest neighbour" bzw. "nächste Nachbarn" oder eine lineare Interpolation, aus den Kalibrierdaten k bestimmt werden.

Weiterbildend umfasst die erfindungsgemäße Kalibriervorrichtung eine Prüfeinheit mit Qualitätsparametern für den zu kalibrierenden Drehgeber, wobei die Prüfeinheit so eingerichtet ist, dass das Drehwinkelsignal des Drehgebers mittels der Qualitätsparameter bewertbar ist, wobei insbesondere eine Qualitätsinformation an die externe Steuereinheit mittels der Datenschnittstelle übertragbar ist oder eine Qualitätsinformation mittels Signalmitteln an Bedienpersonal ausgebbar ist.

Die Signalmittel sind bevorzugt als Lichtquelle, insbesondere als rote und grüne Lichtquelle zur Ausgabe eines positiven oder negativen Prüfergebnisses ausgebildet. Zudem kann das Prüfergebnis oder Qualitätsinformation auch durch einen gepulsten Blink-Betrieb von Leuchtmittel an Prüfpersonal ausgegeben werden.

Weiterhin ist es bevorzugt vorgesehen, dass die Kalibriervorrichtung eine Bedien- und/oder Anzeigeeinheit für die Eingabe von Steueranweisungen und/oder für die Ausgabe von Qualitätsinformationen umfasst.

Weiterbildend umfasst die erfindungsgemäße Kalibriervorrichtung eine mechanische Schnittstelle zum Koppeln von Antriebsmitteln zum Erzeugen einer Rotationsbewegung der Welle.

Weiterbildend umfasst die erfindungsgemäße Kalibriervorrichtung ein Antriebsmittel zum Erzeugen einer Rotationsbewegung der Welle.

Weiterbildend ist es vorgesehen, dass die Datenschnittstelle zusätzlich mit den Antriebsmitteln verbindbar ist, insbesondere zum Steuern einer Rotationsbewegung der Welle.

Weiterbildend ist es vorgesehen, dass die Datenschnittstelle mit einem Motor verbindbar ist, wobei der Motor eine Motorwelle sowie den zu kalibrierenden oder zu justierenden Drehgeber zum Erfassen der Rotationsbewegung der Motorwelle aufweist.

Weiterbildend ist es vorgesehen, dass die Datenschnittstelle ein Drehwinkelsignal an eine externe Steuereinheit senden kann, die dem Drehwinkeleingangssignal und/oder dem wenigstens einen Grobwinkelsignal und/oder dem Referenzgrobwinkelsignal und/oder dem Referenzfeinwinkelsignal entspricht und/oder durch Rechenschritte, insbesondere durch einen der vorgenannten Rechenschritte, ermittelt werden kann.

Weiterbildend ist es vorgesehen, dass die Datenschnittstelle ein Drehzahlsignal an eine externe Steuereinheit senden kann, die aus dem Drehwinkeleingangssignal und/oder dem wenigstens einen Grobwinkelsignal und/oder dem Referenzgrobwinkelsignal und/oder dem Referenzfeinwinkelsignal durch Differenzieren, ermittelt werden kann.

Es wird darauf hingewiesen, dass die erfindungsgemäße Kalibriervorrichtung dazu ausgebildet ist, eine Messprozedur durchzuführen, um eine Abweichung des Drehgebers zur Kalibriervorrichtung zu erkennen. Diese Abweichung ist von den Kalibrierdaten umfasst.

Diese Messprozedur wird durch die Rechenvorschrift ausgebildet.

Ferner wird im Rahmen der vorliegenden Erfindung auch Schutz für eine Justiervorrichtung beansprucht, die eine erfindungsgemäße Kalibriervorrichtung umfasst.

Die erfindungsgemäße Justiervorrichtung umfasst zudem Justiermittel, die so eingerichtet sind, dass Justierdaten j aus dem Drehwinkeleingangssignal, dem wenigstens einen Referenzgrobwinkelsignal und/oder dem Referenzfeinwinkelsignal bestimmbar sind.

Gemäß einer ersten bevorzugten Ausführungsform sind die Justiermittel so ausgebildet, dass die Justierdaten aus dem Drehwinkeleingangssignal, dem wenigstens einen Referenzgrobwinkelsignal und dem Referenzfeinwinkelsignal bestimmbar sind, wobei die Justiermittel in diesem Zusammenhang entsprechend der Kalibriermittel ausgebildet sind und die Justierdaten j somit den Kalibrierdaten k entsprechen.

Gemäß einer zweiten bevorzugten Ausführungsform sind die Justiermittel so eingerichtet, dass die Justierdaten j nur eine Teilinformation der Kalibrierdaten k umfassen. Diese Teilinformation kann insbesondere durch die Frequenz, die Phase und den Betrag eines sinusförmigen Fehleranteils ausgebildet ist, um nur diesen Fehler zu korrigieren.

Gemäß einer dritten bevorzugten Ausführungsform sind die Justiermittel derart eingerichtet, dass nur die Abweichung des Drehwinkeleingangssignal vom Referenzgrobwinkelsignal bestimmt wird, um eine Korrektur des Drehwinkeleingangssignals des zu justierenden Drehgebers nur hinsichtlich eines Winkelfehlers der ersten Art, insbesondere des Rundlauf- und/oder Taumelwinkelfehlers zu erzielen. In vorteilhafter Weise werden somit nur die Anbautoleranzen des (zu justierenden) Drehwinkelgebers auf die Welle korrigiert.

Die Justierdaten j werden hierbei durch das tiefpassgefilterte Fehlersignal e_filt ausgebildet.

Ferner ist es bei der erfindungsgemäßen Justiervorrichtung vorgesehen, dass die Kommunikationsmittel so ausgebildet sind, dass die Justierdaten j an den zu justierenden Drehgeber übertragbar sind. Es kommt somit bei der Justiervorrichtung zu einem aktiven Eingriff in den Drehgeber durch das Übermitteln der Justierdaten j.

Der zu justierende Drehgeber umfasst bevorzugt nichtflüchtige Speichermittel, um die Justierdaten j abzulegen und somit dauerhaft zu speichern.

Ferner umfasst der Drehgeber eine Korrektureinheit, um sein Drehwinkelsignal, das dem Drehwinkeleingangssignal entspricht, mittels der Justierdaten j zu korrigieren. In vorteilhafter Weise wird es somit ermöglicht, dass der Einfluss unterschiedlicher Winkelfehler, insbesondere des Rundlauf- und/oder Taumelwinkelfehlers, aus dem Drehgebereingangssignal und somit der Anbau- und/oder Montagetoleranzen minimiert werden können.

Es wird darauf hingewiesen, dass die erfindungsgemäße Justiervorrichtung dazu ausgebildet ist, eine Messprozedur durchzuführen, um eine Abweichung des Drehgebers zu erkennen. Diese Abweichung ist von den Justierdaten umfasst, die dann an den zu justierenden Drehgeber übermittelt werden. Der Drehgeber kann durch die Justierdaten sein Drehwinkelsignal korrigieren, um den Einfluss des Rundlauf- und/oder Taumelfehlers zu reduzieren.

Bei der erfindungsgemäßen Justiervorrichtung kommt es somit zu einem aktiven Eingreifen in den zu justierenden Drehgeber. Bei der erfindungsgemäßen Kalibriervorrichtung kommt es nicht zu so einem solchen Eingriff in den zu kalibrierenden Drehgeber. Die Kalibriervorrichtung erkennt lediglich eine Abweichung zum eigenen Referenzsystem, das durch den gelagerten Referenzgeber gebildet wird. Ggf. wird lediglich ein Prüfergebnis oder eine Qualitätsinformation an eine externe Steuereinheit übertragen.

Im Folgenden ist die Erfindung beispielhaft mit Bezug auf die Zeichnungen näher erläutert. Die bei den gezeigten Ausführungsformen beispielhaft dargestellte Merkmalskombination kann nach Maßgabe der obigen Ausführungen entsprechend den für einen bestimmten Anwendungsfall notwendigen Eigenschaften des Erfindungsgegenstands durch weitere Merkmale ergänzt werden. Auch können, ebenfalls nach Maßgabe der obigen Ausführungen, einzelne Merkmale bei den beschriebenen Ausführungsformen weggelassen werden, wenn es auf die Wirkung dieses Merkmals in einem konkreten Anwendungsfall nicht ankommt.

In den Zeichnungen sind Elemente gleicher Funktion und/oder gleichen Aufbaus mit demselben Bezugszeichen bezeichnet.

Es zeigen:
- Fig. 1a/b:: eine schematische Darstellung eines erfindungsgemäßen Winkelpositionsgebers gemäß einer bevorzugten Ausführungsform zum Erfassen des Drehwinkels einer Welle 50 bei einer Rotation um eine erste Rotationsachse R1;
- Fig. 2:: eine schematische Darstellung einer erfindungsgemäßen Kalibriervorrichtung gemäß einer bevorzugten Ausführungsform zum Erzeugen von Kalibrierdaten für einen zu kalibrierenden Drehgeber, der ein Drehwinkelsignal bei einer Rotationsbewegung einer gelagerten Welle erzeugen kann;
- Fig. 3:: eine schematische Darstellung einer erfindungsgemäßen Justiervorrichtung gemäß einer bevorzugten Ausführungsform zum Erzeugen von Justierdaten für einen zu kalibrierenden Drehgeber, der einen Drehwinkelsignal bei einer Rotationsbewegung einer Motorwelle erzeugen kann sowie
- Fig. 4:: eine schematische Darstellung der erfindungsgemäßen Justiervorrichtung gemäß einer weiteren Ausführungsform zum Erzeugen von Justierdaten für einen zu kalibrierenden Drehgeber, der ein Drehwinkelsignal bei einer Rotationsbewegung einer Motorwelle erzeugen kann.

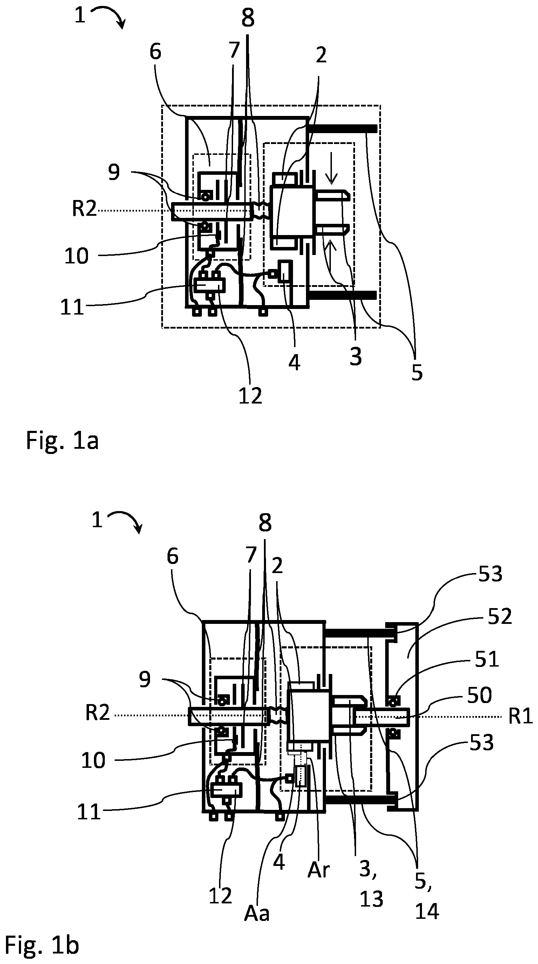

Die Fig. 1a/b zeigen jeweils eine bevorzugte Ausführungsform des erfindungsgemäßen Winkelpositionsgebers 1. Die Fig. 1a zeigt den erfindungsgemäßen Winkelpositionsgeber 1 in Alleindarstellung und die Fig. 1b zeigt den erfindungsgemäßen Winkelpositionsgeber 1 zusammen mit einer Welle 50, deren Drehwinkel von dem erfindungsgemäßen Winkelpositionsgeber 1 erfasst wird.

Der erfindungsgemäße Winkelpositionsgeber 1 umfasst in dem in der Fig. 1a gezeigten Ausführungsbeispiel eine erste Maßverkörperung 2 mit Festlegmitteln 3. Die Festlegmittel 3 sind so ausgebildet, dass die erste Maßverkörperung 2 in einem Festlegzustand mit einer nicht dargestellten Welle starr verbunden werden kann. Im Festlegzustand rotiert die erste Maßverkörperung 2 somit zusammen mit der zu überwachenden Welle um eine erste Rotationsachse R1 (vgl. Fig. 1b).

Ferner umfasst der erfindungsgemäße Winkelpositionsgeber 1 Drehwinkelsensormittel 4, die zum Zusammenwirken mit der ersten Maßverkörperung 2 ausgebildet sind und somit in einem Montagezustand zum Abbilden der Drehbewegung der Welle ausgebildet sind. Die Drehbewegung der Welle wird hierbei durch ein Grobwinkelsignal dargestellt, das die Drehwinkel der ersten Maßverkörperung 2 an einer bestimmten Winkelposition abbildet.

Die Drehwinkelsensormittel 4 umfassen Montagemittel 5, die die Positionierung der Drehwinkelsensormittel 4 relativ zur ersten Maßverkörperung 2 in einem Montagezustand ermöglichen. In Draufsicht auf die erste Maßverkörperung 2 lesen die Drehwinkelsensormittel 4 die rotierbare erste Maßverkörperung 2 an wenigstens einer festen Winkelposition aus.

Vorliegend sind die Drehwinkelsensormittel 4 so ausgebildet, dass neben dem ersten Grobwinkelsignal phi_1 noch ein zweites Grobwinkelsignal phi_2 und ein drittes Grobwinkelsignal phi_3 erzeugt wird. Die erste Maßverkörperung 2 wird somit nicht nur an einer ersten Winkelposition α_1, sondern auch an einer zweiten Winkelposition α_2 und an einer dritten Winkelposition α_3 ausgelesen.

Weiterhin umfasst der erfindungsgemäße Winkelpositionsgeber 1 einen Referenzgeber 6, der auch den Drehwinkel einer Drehbewegung der Welle erfasst. Der Referenzgeber 6 ist eigengelagert und umfasst eine zweite Maßverkörperung 7, die über Lagermittel 9 um eine zweite Rotationsachse R2 drehbar gelagert ist. Die zweite Maßverkörperung 7 kann von Sensormitteln 10 ausgelesen werden. Die Sensormittel 10 lesen die zweite Maßverkörperung 7 an einer festgelegten Winkelposition aus und erfassen somit die Drehbewegung der zweiten Maßverkörperung 7.

Über Verbindungsmittel 8 ist die zweite Maßverkörperung 7 in einem Kupplungszustand mit der ersten Maßverkörperung 2 drehstarr verbunden. Zusätzlich sind auch die Sensormittel 10 zumindest im Kupplungszustand mit den Drehwinkelsensormitteln 4 drehstarr verbunden. Der Referenzgeber 6 kann somit ein Referenzfeinwinkelsignal zum Abbilden der Drehbewegung der zweiten Maßverkörperung 7 erzeugen.

Das Referenzfeinwinkelsignal hat im Vergleich zum Grobwinkelsignal eine höhere Auflösung. Anders ausgedrückt, die von der zweiten Maßverkörperung 7 umfasste Codespur hat bevorzugt eine feinere Auflösung als die Codespur, die von der ersten Maßverkörperung 2 umfasst ist.

Weiterhin umfasst der erfindungsgemäße Winkelpositionsgeber 1 Korrekturmittel 11, die auf Grundlage einer Rechenvorschrift aus dem Grobwinkelsignal ein Referenzgrobwinkelsignal bestimmen. Durch die Rechenvorschrift wird der Einfluss eines Exzentrizitätswinkelfehlers und/oder eines Taumelwinkelfehlers der überwachten Welle korrigiert, weshalb das Referenzgrobwinkelsignal den Drehwinkels und die daraus ableitbare Rotationsbewegung der überwachten Welle ohne den Einfluss dieser Störgrößen abbildet.

Die Korrekturmittel, die die Rechenvorschrift zum Bestimmen des fehlerbereinigte Referenzgrobwinkelsignal phi_grob umfassen, nutzen den vorliegenden Zusammenhang. $phi _ grob = \frac{{phi}_{1} + {phi}_{2} - α _ 2 + {phi}_{3} - α _ 3}{3}$

Hierbei ist phi_1 das erste Grobwinkelsignal, phi_2 das zweite Grobwinkelsignal und phi_3 das dritte Grobwinkelsignal. Ferner gilt für die erste Winkelposition des ersten Grobwinkelsignals α_1 = 0°, für die zweite Winkelposition des zweiten Grobwinkelsignals α_2 = 120° und für die dritte Winkelposition des dritten Grobwinkelsignals α_3 = 240°.

Es wird darauf hingewiesen, dass wiederum phi_1 = phi₁, phi_2 = phi₂ und phi_3 = phi₃ gilt.

Die Korrekturmittel 11 nutzen entweder nur ein einzelnes Grobwinkelsignal und die Rechenvorschrift oder zwei oder mehr Grobwinkelsignale und eine entsprechend angepasste Rechenvorschrift.

Für den Fall, dass zwei oder mehr Grobwinkelsignale verarbeitet werden, sind die Drehwinkelsensormittel 4 so ausgebildet, dass die erste Maßverkörperung 2 nicht nur an einer einzelnen Winkelposition, sondern an zwei oder mehr Winkelpositionen ausgelesen wird. In vorteilhafter Weise lässt sich durch die Verwendung von zwei oder mehr Grobwinkelsignalen das Referenzgrobsignal mit weniger Rechenaufwand bestimmen.

Zudem umfasst der der erfindungsgemäße Winkelpositionsgeber 1 Positionsbestimmungsmittel 12 zum Bestimmen und Ausgeben eines Positionsausgangssignals.

Die Positionsbestimmungsmittel 12 sind so ausgebildet, dass das Positionsausgangssignal aus dem Referenzfeinwinkelsignal und dem Referenzgrobwinkelsignal gemäß einer weiteren Rechenvorschrift bestimmbar ist.

Die weitere Rechenvorschrift umfasst daher die folgenden Schritte:
Das Fehlersignal e zwischen dem Referenzfeinwinkelsignal phi_fein und dem Referenzgrobwinkelsignal phi_grob lässt sich wie folgt bestimmen: $e = phi _ fein - phi _ grob$

Bei dem Fehlersignal e lassen sich die jeweiligen spezifischen Fehler, insbesondere des ersten Winkelfehlertyps und des weiteren Winkelfehlertyps, von phi_fein und/oder von phi_grob bezogen auf den Drehwinkel der Welle, insbesondere im Frequenzbereich, trennen.

Dies kann durch die Anwendung eines Filters, insbesondere eines Tiefpassfilters, technisch umgesetzt werden, um die Drehwinkelfehler des ersten Winkelfehlertyps zu erhalten.

Das Positionsausgangssignal phi_pos ergibt sich dann aus der folgenden Differenz: $phi _ pos = phi _ fein - e _ filt ,$ wobei e_filt das gefilterte, insbesondere tiefpassgefilterte, Fehlersignal e ist und damit im Wesentlichen dem Drehwinkelfehler ersten Winkelfehlertyps darstellt.

In der Fig. 1b ist die aus der Fig. 1a bekannte Winkelpositionsgeber 1 zusammen mit einer drehbar gelagerten Welle 50 dargestellt.

Die Welle 50 ist über ein Kugellager 51 drehbar um eine erste Rotationsachse R1 gelagert. Ferner umfasst die Welle 50 ein Gehäuseteil 52, das zum Zusammenwirken mit den Montagemitteln 5 des erfindungsgemäßen Winkelpositionsgebers 1 einen Aufnahmeabschnitt 53 umfasst.

Der bereits aus der Fig. 1a bekannte Winkelpositionsgeber 1 ist nun mechanisch mit der Welle 50 gekoppelt, um deren Drehwinkel und die ableitbare Rotationsbewegung zu erfassen.

Gemäß der vorliegenden Erfindung basiert die mechanische Kopplung darauf, dass über die Festlegmittel 3 die erste Maßverkörperung 2 zunächst mit der Welle verbunden wird.

Die Festlegmittel 3 sind vorliegend als ein Spannfutter 13 ausgebildet, um die Maßverkörperung 2 auf der Welle 50 festzulegen und den Festlegzustand zu realisieren.

Das Spannfutter 13 ist selbstzentrierend ausgebildet und die erste Maßverkörperung 2 ist im Festlegzustand starr mit der Welle 50 verbunden. Die erste Maßverkörperung 2 rotiert somit zusammen mit der Welle 50 um die erste Rotationsachse R1.

Die erfindungsgemäße mechanische Kopplung sieht ferner vor, dass die erfindungsgemäßen Drehwinkelsensormittel 4 über die Montagemittel 5 relativ zur ersten Maßverkörperung 2 festlegbar sind. Im Montagezustand sind die Drehwinkelsensormittel 4 so relativ zur ersten Maßverkörperung 2 positioniert, dass die Rotationsbewegung der ersten Maßverkörperung 2 über die Drehwinkelsensormittel 2 erfasst werden kann.

Im vorliegenden Ausführungsbeispiel umfassen die Montagemittel 5 mehrere Passstifte 14, die zum Eingreifen in eine Passstiftaufnahme 53, die vom Gehäuseteil 52 umfasst ist, eingreifen.

Durch die erfindungsgemäßen Drehwinkelsensormittel 4 kann somit die Rotationsbewegung der Welle 50 erfasst und durch wenigstens ein Grobwinkelsignal abgebildet werden.

Die Montagemittel 5 sowie die Festlegmittel 3 legen somit gemeinsam einen Radialabstand Ar der ersten Maßverkörperung 2 zu den Drehwinkelsensormitteln 4 fest. Der Radialabstand Ar verläuft ausgehend von der ersten Rotationsachse R1 in radialer Richtung und ist durch den Abstand der ersten Maßverkörperung 2 zu den Drehwinkelsensormitteln 4 bestimmt.

Zudem wird von den Montagemittel 5 sowie die Festlegmittel 3 auch ein Axialabstand Aa zwischen der ersten Maßverkörperung 2 zu den Drehwinkelsensormitteln 4 festgelegt. Der Axialabstand Aa verläuft parallel zur ersten Rotationsachse R1 und erstreckt sich von der freien Stirnfläche der ringförmigen ersten Maßverkörperung 2 bis zur Mitte der Drehwinkelsensormittel 4.

Zusätzlich wird die Rotationsbewegung auch von dem erfindungsgemäßen Referenzgeber 6, der von dem erfindungsgemäßen Winkelpositionsgeber 1 umfasst ist, erfasst. Hierfür ist der Referenzgeber 6 zumindest in einem Kupplungszustand durch die erfindungsgemäßen Verbindungsmittel 8 drehstarr mit der ersten Maßverkörperung 2 gekoppelt. Konkret bedeutet dies, dass die zweite Maßverkörperung 7, die vom Referenzgeber 6 umfasst ist, im Kupplungszustand mit der ersten Maßverkörperung 2 und vorliegend auch mit der Welle 50 drehstarr verbunden ist. Die zweite Maßverkörperung 7 wird dann von den Sensormitteln 10 ausgelesen, um das Referenzfeinwinkelsignal zu erzeugen.

Erfindungsgemäß wird die Rotationsbewegung der Welle 50 auf die erste Maßverkörperung 2 und auf die zweite Maßverkörperung 7 übertragen. Die erste Maßverkörperung 2 rotiert hierbei zusammen mit der Welle 50 um die erste Rotationsachse R1, während die zweite Maßverkörperung 7 aufgrund der Lagermittel 9 um die zweite Rotationsachse R2 rotiert.

Es wird darauf hingewiesen, dass sich die erste Rotationsachse R1 von der zweiten Rotationsachse R2 unterscheiden kann, da diese von unterschiedlichen Lagern - zum einen die Lagermittel 9 des Referenzgebers 6 und zum anderen das Kugellager 51 der Welle 50 - bestimmt wird.

Mittels der bereits erwähnten Korrekturmittel 11 wird dann aus dem Grobwinkelsignal das Referenzgrobwinkelsignal erzeugt, um den Einfluss eines Exzentrizitäts- und/oder Taumelwinkelfehlers zu entfernen.

Weiterhin wird mittels der Positionsbestimmungsmittel 12 dann das Positionsausgangssignal bestimmt, wobei die Positionsbestimmungsmittel 12 so ausgebildet sind, dass das Positionsausgangssignal aus dem Referenzfeinwinkelsignal und dem Referenzgrobwinkelsignal gemäß einer weiteren Rechenvorschrift bestimmbar ist.

Im Ergebnis lässt sich der erfindungsgemäße Winkelpositionsgeber 1 bei großen mechanischen Toleranzen und somit bei geringem Montageaufwand an der zu überwachenden Welle 50 festlegen, wobei durch die erfindungsgemäße Kombination einer fremdgelagerten ersten Maßverkörperung 2 und einer eigengelagerten zweiten Maßverkörperung 7 dennoch ein Positionsausgangssignal erzeugbar ist, das eine hohe Auflösung und geringe Winkelfehler aufweist und somit die Rotationsbewegung der Welle 50 mit geringer Abweichung abbildet.

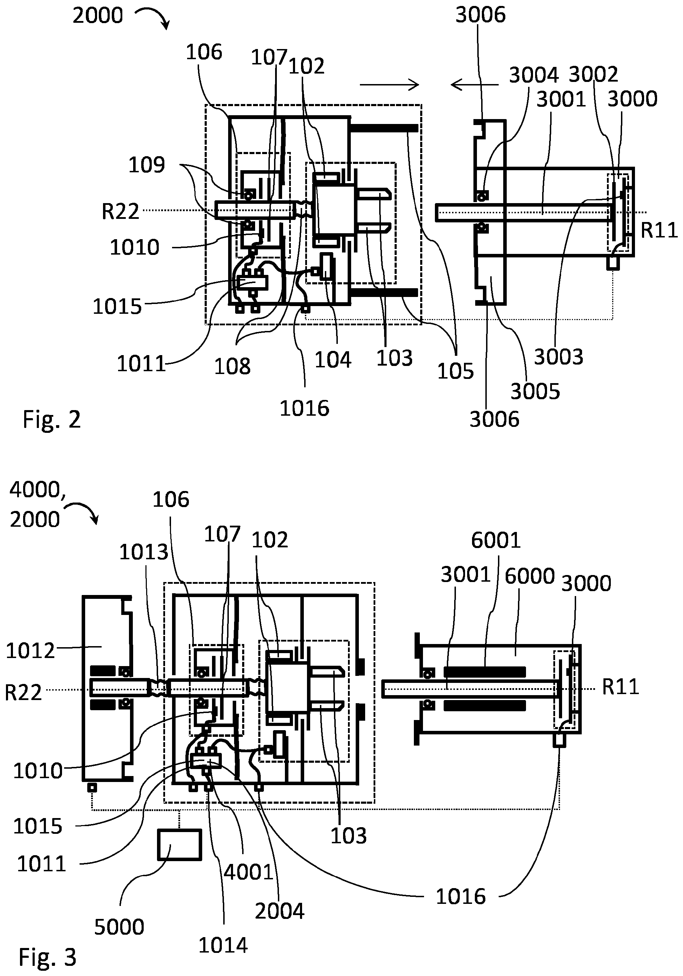

Die Fig. 2 zeigt eine schematische Darstellung einer erfindungsgemäßen Kalibriervorrichtung 2000 gemäß einer bevorzugten Ausführungsform.

Die erfindungsgemäße Kalibriervorrichtung 2000 ist eingerichtet zum Erzeugen von Kalibrierdaten für einen zu kalibrierenden Drehgeber 3000, der den Drehwinkel für eine daraus ableitbare Rotationsbewegung einer über ein Lager 3004 gelagerten Welle 3001 überwacht.

Der zu kalibrierende Drehgeber 3000 umfasst eine als optische Codescheibe ausgebildete Maßverkörperung 3002, die von axial beabstandeten Erfassungsmitteln 3003 ausgelesen wird.

Die Erfassungsmittel 3003 sind zum Ausgeben eines Drehwinkelsignals ausgebildet, das den Drehwinkel der Welle 3001 abbildet.

Ferner umfassen die Welle 3001 sowie der Drehgeber 3000 ein Umgehäuse 3005. Das Umgehäuse 3005 umgibt die Welle 3001 zumindest bereichsweise und umfasst einen Aufnahmeabschnitt 3006 zum Zusammenwirken mit später noch im Detail erläuterten Montagemitteln 105 der erfindungsgemäßen Kalibriervorrichtung 2000.

Die erfindungsgemäße Kalibriervorrichtung 2000 lässt sich nun - in Übereinstimmung zum in den Figuren 1a/b vorgestellten erfindungsgemäßen Winkelpositionsgeber - mittels der Montagemittel 105 und mittels Festlegmitteln 103 so mit der Welle 3001 in Wirkverbindung bringen, dass die Rotationsbewegung der Welle 3001 auf eine erste Maßverkörperung 102 und auf eine zweite Maßverkörperung 107 übertragen wird.

Die erfindungsgemäße Kalibriervorrichtung 2000 umfasst zunächst die erste Maßverkörperung 102, die sich durch die Festlegmittel 103 mit der Welle 3001 mechanisch koppeln und somit drehstarr verbinden lässt, um einen Festlegzustand zu realisieren. Andres ausgedrückt, im Festlegzustand ist die erste Maßverkörperung 102 zusammen mit der Welle 3001 drehbar um die erste Rotationsachse R11 gelagert, wobei die Rotationsachse R11 durch das Lager 3004 der Welle 3001 bestimmt und/oder definiert wird.

Weiterhin umfasst die erfindungsgemäße Kalibriervorrichtung 2000 Drehwinkelsensormittel 104. Die Drehwinkelsensormittel 104 umfassen die bereits erwähnten Montagemittel 105, um einen Montagezustand zu realisieren.

Im Montagezustand sind die Drehwinkelsensormittel 104 relativ zur im Festlegzustand positionierten ersten Maßverkörperung 102 angeordnet, derart, dass die erste Maßverkörperung 102 von den Drehwinkelsensormitteln 104 ausgelesen werden kann und somit wenigstens ein Grobwinkelsignal zum Abbilden des Drehwinkels erzeugbar ist.

Die erfindungsgemäße Kalibriervorrichtung 2000 umfasst zudem einen Referenzgeber 106, der die bereits erwähnte zweite Maßverkörperung 107 umfasst. Zudem weist der Referenzgeber 106 Verbindungsmittel 108, Lagermittel 109 sowie Sensormittel 1010 auf.

Die Verbindungsmittel 108 ermöglichen, dass die zweite Maßverkörperung 107 zumindest in einem Kupplungszustand mit der ersten Maßverkörperung 102 drehstarr gekoppelt ist.

Die Sensormittel 1010 sind so ausgebildet, dass im Kupplungszustand die zweite Maßverkörperung 107 auslesbar und ein Referenzfeinwinkelsignal erzeugbar ist.

Die zweite Maßverkörperung 107 ist über die Lagermittel 109 rotierbar um eine zweite Rotationsachse R22 gelagert.

Erfindungsgemäß können sich die jeweilige Rotationsachse der ersten und zweiten Maßverkörperung voneinander unterscheiden. Somit kann der Rundlauffehler der Welle 3001 über die erste Maßverkörperung 102 ermittelt werden. Hierbei können große mechanische Toleranzen vorliegen, da die sich ausbildenden Exzentrizitäts- und/oder Taumelwinkelfehler durch die vorliegende Erfindung erfassbar und korrigierbar sind.

Durch den Referenzgeber 106, der über die Lagermittel 109 eigengelagert ist, kann dann mit einer höheren Auflösung die Drehbewegung der Welle 3001 erfasst werden.

Weiterhin umfasst die erfindungsgemäße Kalibriervorrichtung 2000 Korrekturmittel 1011, um auf Grundlage der bereits im Zusammenhang des erfindungsgemäßen Winkelpositionsgebers 1 beschriebenen Rechenvorschrift aus dem wenigstens einen Grobwinkelsignal phi_1 ein Referenzgrobwinkelsignal phi_grob zu bestimmen.

Das wenigstens eine Grobwinkelsignal wurde so korrigiert, dass der Einfluss des Rundlauffehlers und/oder eines Taumelfehlers der Welle 3001 im Wesentlichen vollständig korrigiert ist und somit im Referenzgrobwinkelsignal phi_grob im Wesentlichen nichtmehr enthalten ist.

Die Bestimmung des Referenzgrobwinkelsignal phi_grob kann beispielsweise gemäß der Lehre der EP 3 839 442 B1 erfolgen. Alternativ ist es besonders bevorzugt, dass das Referenzgrobwinkelsignal phi_grob durch die Verrechnung mehrere Grobwinkelsignale bestimmt wird, wobei in diesem Zusammenhang auf das Ausführungsbeispiel gemäß der Fig. 1 verwiesen wird, wobei die Drehwinkelsensormittel 104 so ausgebildet sind, dass ein erstes Grobwinkelsignal phi_1, ein zweites Grobwinkelsignal phi_2 und ein drittes Grobwinkelsignal phi_3 erzeugt wird.

Zudem umfasst die erfindungsgemäße Kalibriervorrichtung 2000 Kommunikationsmittel 1016, die mit dem Drehgeber 3000 signaltechnisch verbindbar sind, um das wenigstens eine Drehwinkelsignal zu empfangen.

Ferner umfasst die erfindungsgemäße Kalibriervorrichtung 2000 Kalibriermittel 1015. Die erfindungsgemäßen Kalibriermittel 1015 sind so eingerichtet, dass die Kalibrierdaten k aus dem Drehwinkelsignal, dem wenigstens einen Referenzgrobwinkelsignal sowie dem Referenzfeinwinkelsignal bestimmt werden können.

Hierbei wird die Abweichung des Drehwinkelsignals zum Referenzfeinwinkelsignal unter Berücksichtigung des Referenzgrobwinkelsignals ausgewertet, um damit die Kalibrierdaten k zu bestimmen.

Vorliegend sind die Kalibriermittel 1015 derart eingerichtet, dass ein Zwischenreferenzwinkelsignal phi_ref aus dem Referenzgrobwinkelsignal phi_grob und dem Referenzfeinwinkelsignal phi_fein entsprechend des im Zusammenhang des erfindungsgemäßen Winkelpositionsgebers 1 beschriebenen Verfahren bestimmt wird,
wobei das Zwischenreferenzwinkelsignal phi_ref dem Positionsausgangssignals phi_pos entspricht und sich aus der folgenden Differenz ergibt: $phi _ ref = phi _ fein - e _ filt ,$
wobei e_filt das gefilterte, insbesondere tiefpassgefilterte, Fehlersignal e = phi_fein - phi_grob ist und damit im Wesentlichen dem Drehwinkelfehler des ersten Winkelfehlertyps entspricht.

Die Kalibrierdaten k ergeben sich dann durch die Differenz des Drehwinkeleingangssignals phi_in und des Zwischenreferenzwinkelsignals phi_ref zu k= phi_in - phi_ref.

Die Fig. 3 zeigt die bereits bekannte Kalibriervorrichtung 2000 in der konkretisierten Ausführungsform einer Justiervorrichtung 4000. Zur Vermeidung von Wiederholungen wird auf die Beschreibung der erfindungsgemeäßen Kalibriervorrichtung 2000 gemäß der Fig. 2 verwiesen.

Die Justiervorrichtung 4000 ist dazu ausgebildet Justierdaten j für einen zu justierenden Drehgeber 3000 zu erzeugen, um das Drehwinkelsignal des zu justierenden Drehgebers 3000 zu korrigieren. Durch die Korrektur des Drehwinkelsignals des Drehgebers 3000 soll der negative Einfluss von Fehlern, insbesondere des ersten Typs, wie etwa einem Rundlaufwinkelfehler und/oder einem Taumelwinkelfehler, und/oder des weiteren Typs durch Verarbeitung der Justierdaten j behoben werden.

Hierfür umfasst die Justiervorrichtung 4000 neben den erfindungsgemäßen Komponenten der umfassten Kalibriervorrichtung 2000 zusätzlich noch Justiermittel 4001. Die erfindungsgemäßen Justiermittel 4001 sind dazu eingerichtet, die Justierdaten j aus dem Drehwinkelsignal phi_in, dem wenigstens einen Grobwinkelsignal bzw. dem daraus bestimmten Referenzgrobwinkelsignal phi_grob und/oder dem Referenzfeinwinkelsignal phi_fein zu bestimmen.

Im vorliegenden Ausführungsbeispiel sind die erfindungsgemäßen Justiermittel 4001 so eingerichtet, dass die Abweichung des Drehwinkeleingangssignals phi_in vom Referenzgrobwinkelsignal phi_grob bestimmt wird. Vorteilhaft kann somit die Korrektur des Drehwinkeleingangssignals phi_in des zu justierenden Drehgebers 3000 hinsichtlich eines Winkelfehlers der ersten Art, insbesondere des Rundlauf- und/oder Taumelwinkelfehlers, erzielt werden.

Somit wird es ermöglicht, dass der zu justierende Drehgeber 3000 nur hinsichtlich der Anbautoleranzen korrigiert wird. Diese Anbautoleranzen beziehen sich auf die Relativposition zwischen dem zu justierenden Drehgeber 3000 und der zu überwachenden Welle 3001, wobei der zu justierende Drehgeber 3000 mit der Welle 3001 verbunden ist und zumindest im Kupplungszustand über die Festlegmittel 103 drehstarr mit der ersten Maßverkörperung 102 verbunden ist.

Die Justierdaten j werden hierbei durch das tiefpassgefilterte Fehlersignal e_filt gebildet, wobei e_filt das gefilterte, insbesondere tiefpassgefilterte, Fehlersignal e = phi_in - phi_grob ist und damit im Wesentlichen dem Drehwinkelfehler des ersten Winkelfehlertyps entspricht. Zur Bestimmung von phi_grob wird auf das Ausführungsbeispiel gemäß der Fig. 2 verwiesen.

Zudem sind die von der erfindungsgemäßen Justiervorrichtung 4000 umfassten Kommunikationsmittel 1016 für eine bidirektionale Kommunikation ausgebildet, um die mittels der Justiermittel 4001 bestimmten Justierdaten j an den zu justierenden Drehgeber 3000 zu übermitteln.

Ferner wird darauf hingewiesen, dass der zu justierende Drehgeber 3000 im vorliegenden Ausführungsbeispiel von einem Motor 6000 umfasst ist. Der Motor 6000 umfasst bestrombare Wicklungen 6001, um die Motorwelle 3001 in Rotation zu versetzen.

Der zu justierende Drehgeber 3000 umfasst nicht dargestellte nichtflüchtige Speichermittel, um die Justierdaten j dauerhaft abzulegen. Ferner umfasst der Drehgeber 3000 eine nicht dargestellte Korrektureinheit, um sein Drehwinkelsignal mittels der Justierdaten j zu korrigieren und somit den Einfluss des ersten und insbesondere des weiteren Fehlertyps im Wesentlichen zu eliminieren.

Im figürlich gezeigten Ausführungsbeispiel umfasst die erfindungsgemäße Justiervorrichtung 4000 auch eine Datenschnittstelle 1014 zum Übermitteln der Kalibrierdaten k und/oder der Justierdaten j an eine externe Steuereinheit 5000. Die Datenschnittstelle 1014 ist vorliegend durch ein Bus-Kommunikationssystem ausgebildet, das vorliegend durch die bidirektionalen Kommunikationsmittel 1016 ausgebildet wird.

Neben den bereits im Zusammenhang des Ausführungsbeispiels der Fig. 2 erfindungswesentlichen Komponenten der Kalibriervorrichtung 2000, umfasst die dargestellte Justiervorrichtung 4000 noch eine mechanische Schnittstelle 1013 zum Koppeln von Antriebsmitteln 1012 zum Erzeugen einer Rotationsbewegung der Welle 3001 insbesondere im Kupplungszustand.

Vorteilhaft kann somit eine Kalibrierung und/oder eine Justierung ohne das Ansteuern des Motors 6000 erfolgen. In diesem Zusammenhang ist es besonders vorteilhaft, wenn die Datenschnittstelle 1014, also vorliegend die Kommunikationsmittel 1016 auch mit den über die mechanische Schnittstelle 1013 ankoppelbaren Antriebsmitteln 1012 verbindbar ist. Vorteilhaft kann somit eine Rotationsbewegung der Welle 3001 ohne einen aktiven Eingriff in den Motor 6ooo gesteuert werden.

Schließlich umfasst die erfindungsgemäße Justiervorrichtung 4000 im vorliegenden Ausführungsbeispiel noch eine nicht im Detail dargestellte Prüfeinheit 2004, die Qualitätsparameter für den zu justierenden Drehgeber 3000 umfasst. Die Prüfeinheit 2004 ist so eingerichtet, dass das Drehwinkelsignal des Drehgebers 3000 mittels der Qualitätsparameter bewertet werden kann. Das Ergebnis dieser Auswertung, also insbesondere eine Qualitätsinformation hinsichtlich des Drehwinkelsignals des Drehgebers 3000 kann dann mittels der Datenschnittstelle 1014 an die externe Steuereinheit 5000 übermittelt werden.

Beispielsweise ist es dann auch möglich, dass die Steuereinheit 5000 anhand der Qualitätsinformationen individuell entscheidet, ob neue Justierdaten j an den Drehgeber 3000 übermittelt werden müssen oder ob durch die bestehenden Justierdaten j die Qualitätsparameter erfüllt werden.

Es besteht somit die Möglichkeit, den Drehgeber 3000 zuerst zu justieren und anschließend zur Kontrolle zu kalibrieren. Anhand der Kalibrierdaten k lässt sich dann insbesondere durch einen Vergleich mit hinterlegten Maximal-Werten als Qualitätsparameter eine Qualitätsinformation erzeugen.

Beispielsweise lässt sich aus der Summe des Betrags vom minimalen Wert der Kalibrierdaten k mit dem Betrag des maximalen Werts der Kalibrierdaten k prüfen, ob diese Summe kleiner ist als ein hinterlegter Qualitätsparameter, der insbesondere einem maximalen Winkelfehler entspricht. Der hinterlegte maximale Winkelfehler kann somit kleiner als 20Winkelsekunden sein. Vorteilhaft ist in diesem Zusammenhang zu erwähnen, dass durch die vorliegende Erfindung keine erneute mechanische und/oder elektrische Kopplung erfolgen muss.

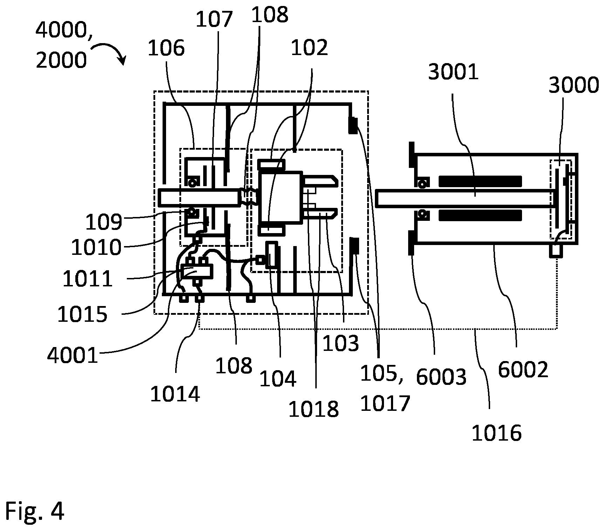

Die Fig. 4 zeigt eine weitere Ausführungsform einer erfindungsgemäßen Justiervorrichtung 4000.

Um Wiederholungen zu vermeiden, wird im Folgenden nur auf die wesentlichen Unterschiede dieser Ausführungsform im Vergleich zu den aus den Figuren 2 und 3 bekannten Ausführungsbeispielen eingegangen.

Zunächst sind die Montagemittel 105 zum Koppeln und Ausrichten der Drehwinkelsensormittel 104 relativ zur ersten Maßverkörperung 102, die im Festlegzustand auf der Welle 3001 montiert ist, durch einen Flansch 1017 ausgebildet, um mit einer Flanschaufnahme am Gehäuse 6002 des Motors 6000 zusammenzuwirken.

Zudem ist die erste Maßverkörperung 102 vorliegend durch lösbare Verbindungsmittel 108 lösbar ausgebildet. Vorteilhaft wird somit eine schrittweise Montage der Justiervorrichtung 4000 ermöglicht, wobei die erste Maßverkörperung 102 zunächst auf die Welle 3001 durch die Festlegmittel 103 festgelegt wird und danach mittels der Montagemittel 105 und den Verbindungsmitteln 108 die Welle 3001 sowohl mit der ersten Maßverkörperung 102 als auch mit dem Referenzgeber 106 drehstarr verbunden werden.

Ferner sind Einstellmittel 1018 vorgesehen, um die Drehwinkelsensormittel 104 in Bezug auf die festgelegte erste Maßverkörperung 102 auszurichten. Die Einstellmittel 1018 realisieren einen Anschlag zur Kontaktierung der freien Stirnseite der Welle 3001.

## Patentansprüche

1. Winkelpositionsgeber (1) zum Erfassen des Drehwinkels einer Welle (50) bei einer Rotation um eine erste Rotationsachse (R1), umfassend
- eine erste Maßverkörperung (2) mit Festlegmitteln (3), die so ausgebildet sind, dass die erste Maßverkörperung (2) in einem Festlegzustand mit der Welle (50) starr verbindbar und somit fremdgelagert ist und um die erste Rotationsachse (R1) rotiert;
- Drehwinkelsensormittel (4) mit Montagemitteln (5), die so ausgebildet sind, dass die Drehwinkelsensormittel (4) in einem Montagezustand relativ zur ersten Maßverkörperung (2) positionierbar sind
wobei die Drehwinkelsensormittel (4) so ausgebildet sind, dass die erste Maßverkörperung (2) auslesbar und wenigstens ein Grobwinkelsignal erzeugbar ist;
- einen Referenzgeber (6) mit einer eigengelagerten zweiten Maßverkörperung (7), Verbindungsmitteln (8), Lagermitteln (9) sowie Sensormitteln (10),
wobei die Verbindungsmittel (8) so ausgebildet sind, dass die eigengelagerte zweite Maßverkörperung (7) zumindest in einem Kupplungszustand mit der ersten Maßverkörperung (2) drehstarr verbunden ist, wobei die zweite Maßverkörperung (7) über die Lagermittel (9) um eine zweite Rotationsachse (R2) drehbar gelagert ist;
wobei die Sensormittel (10) so ausgebildet sind, dass im Kupplungszustand die zweite Maßverkörperung (7) auslesbar und ein Referenzfeinwinkelsignal erzeugbar ist;
- Korrekturmittel (11), die so ausgebildet sind, dass aus dem wenigstens einen Grobwinkelsignal auf Grundlage einer Rechenvorschrift ein Referenzgrobwinkelsignal bestimmbar ist, das um einen ersten Typ Drehwinkelfehler korrigiert ist, welcher insbesondere einen Exzentrizitätswinkelfehler und/oder einen Taumelwinkelfehler der festgelegten Maßverkörperung zur ersten Rotationsachse (R1) der Welle (50) darstellt, und
- Positionsbestimmungsmittel (12) zum Bestimmen und Ausgeben eines Positionsausgangssignals, wobei die Positionsbestimmungsmittel so ausgebildet sind, dass das Positionsausgangssignal aus dem Referenzfeinwinkelsignal und dem Referenzgrobwinkelsignal gemäß einer weiteren Rechenvorschrift bestimmbar ist,
**dadurch gekennzeichnet,**
**dass** die weitere Rechenvorschrift Sensorfusionsalgorithmen, insbesondere einen Kalman-Filter, oder einen Beobachter auf das Referenzgrobwinkelsignal und das Referenzfeinwinkelsignal anwendet, um das Positionsausgangssignal zu erzeugen oder
**dass** die weitere Rechenvorschrift umfasst, dass das Positionsausgangssignal aus der Differenz zwischen dem Referenzfeinwinkelsignal und einem gefilterten Fehlersignal (e_filt) gebildet wird,
wobei das gefilterte Fehlersignal (e_filt) durch die Differenz zwischen dem Referenzfeinwinkelsignal und dem Referenzgrobwinkelsignal und der Anwendung eines Filters oder einer DFT gebildet wird.

2. Winkelpositionsgeber nach Anspruch 1,
**dadurch gekennzeichnet,**
**dass** die Drehwinkelsensormittel (4) so ausgebildet sind, dass wenigstens ein zweites Grobwinkelsignal erzeugbar ist, um die Rotationsbewegung der ersten Maßverkörperung (2) an wenigstens einer zweiten Winkelposition durch das wenigstens eine zweite Grobwinkelsignal abzubilden und dass die Korrekturmittel (11) so ausgebildet sind, dass die Rechenvorschrift beim Bestimmen des Referenzgrobwinkelsignal das wenigstens zweite Referenzgrobwinkelsignal zusätzlich verarbeitet.

3. Winkelpositionsgeber nach Anspruch 1 oder 2,
**dadurch gekennzeichnet,**
**dass** die Festlegmittel (3) als ein Spannfutter (13) oder eine Spannzange zum Festlegen der ersten Maßverkörperung (2) auf der Welle (50) ausgebildet sind und/oder dass das Spannfutter (13) oder die Spannzange selbstzentrierend ausgebildet sind und/oder dass das Spannfutter oder die Spannzange mittels umfasster Stellmittel automatisch, insbesondere pneumatisch oder elektrisch, bedienbar ist.

4. Winkelpositionsgeber nach einem der vorgenannten Ansprüche,
**dadurch gekennzeichnet,**
**dass** die Montagemittel (5) und/oder die Festlegmittel (3) so ausgebildet sind, dass ein Radialabstand (Ar) und ein Axialabstand (Aa) zwischen der ersten Maßverkörperung (2) und den Drehwinkelsensormitteln (4) beeinflussbar und/oder festlegbar ist.

5. Winkelpositionsgeber nach einem der vorgenannten Ansprüche,
**dadurch gekennzeichnet,**
**dass** die erste Maßverkörperung (2) als magnetische Maßverkörperung ausgebildet ist und die Drehwinkelsensormittel (4) als wenigstens ein magnetfeldempfindlicher Sensor, insbesondere als wenigstens ein AMR- und/oder TMR-Sensor, ausgebildet sind.

6. Kalibriervorrichtung (2000) zum Erzeugen von Kalibrierdaten für einen Drehgeber (3000), der eine auf einer Welle (3001) festgelegte Maßverkörperung (3002) und Erfassungsmittel (3003) zum Auslesen der Maßverkörperung (3002) aufweist und ausgebildet ist ein Drehwinkelsignal zum Abbilden des Drehwinkels bei einer Rotationsbewegung der Welle (3001) um eine erste Rotationsachse (R11) zu erzeugen, umfassend
- eine erste Maßverkörperung (102) mit Festlegmitteln (103), die so ausgebildet sind, dass die erste Maßverkörperung (102) in einem Festlegzustand mit der Welle (3001) starr und somit fremdgelagert verbindbar ist und um die erste Rotationsachse (R11) rotiert;
- Drehwinkelsensormittel (104) mit Montagemitteln (105), die so ausgebildet sind, dass die Drehwinkelsensormittel (104) in einem Montagezustand relativ zur ersten Maßverkörperung (102) positionierbar sind, wobei die Drehwinkelsensormittel (104) so ausgebildet sind, dass die erste Maßverkörperung (102) auslesbar und wenigstens ein Grobwinkelsignal erzeugbar ist;
- einen Referenzgeber (106) mit einer eigengelagerten zweiten Maßverkörperung (107), Verbindungsmitteln (108), Lagermitteln (109) sowie Sensormitteln (1010), wobei die Verbindungsmittel (108) so ausgebildet sind, dass die eigengelagerte zweite Maßverkörperung (107) zumindest in einem Kupplungszustand mit der ersten Maßverkörperung (102) drehstarr verbunden ist, wobei die zweite Maßverkörperung (107) über die Lagermittel (109) um eine zweite Rotationsachse (R22) drehbar gelagert ist,
wobei die Sensormittel (1010) so ausgebildet sind, dass im Kupplungszustand die zweite Maßverkörperung (107) auslesbar und ein Referenzfeinwinkelsignal erzeugbar ist;
- Korrekturmittel (1011), die so ausgebildet sind, dass aus dem wenigstens einen Grobwinkelsignal auf Grundlage einer Rechenvorschrift ein Referenzgrobwinkelsignal bestimmbar ist, das um einen ersten Typ Drehwinkelfehler korrigiert ist, welcher insbesondere einen Exzentrizitätswinkelfehler und/oder einen Taumelwinkelfehler der festgelegten Maßverkörperung zur ersten Rotationsachse der Welle darstellt;
- Kommunikationsmittel (1016), die mit dem Drehgeber (3000) signaltechnisch verbindbar sind, um das wenigstens eine Drehwinkeleingangssignal zu empfangen und
- Kalibriermittel (1015), die so eingerichtet sind, dass die Kalibrierdaten aus dem Drehwinkeleingangssignal, dem wenigstens einen Referenzgrobwinkelsignal sowie dem Referenzfeinwinkelsignal bestimmbar sind,
wobei die Kalibriermittel (1015) so ausgebildet sind, dass ein Zwischenreferenzwinkelsignal aus dem Referenzgrobwinkelsignal und dem Referenzfeinwinkelsignal gemäß einer weiteren Rechenvorschrift erzeugbar ist, wobei die weitere Rechenvorschrift Sensorfusionsalgorithmen, insbesondere einen Kalman-Filter, oder einen Beobachter auf das Referenzgrobwinkelsignal und das Referenzfeinwinkelsignal anwendet, um das Positionsausgangssignal zu erzeugen oder
wobei die weitere Rechenvorschrift umfasst, dass das Zwischenreferenzwinkelsignal aus der Differenz zwischen dem Referenzfeinwinkelsignal und einem gefilterten Fehlersignal (e_filt) gebildet wird,
wobei das gefilterte Fehlersignal (e_filt) durch die Differenz zwischen dem Referenzfeinwinkelsignal und dem Referenzgrobwinkelsignal und der Anwendung eines Filters oder einer DFT gebildet wird, wobei sich die Kalibrierdaten durch die Differenz des Drehwinkeleingangssignals und des Zwischenreferenzsignals ergeben.

7. Kalibriervorrichtung nach Anspruch 6,
**gekennzeichnet durch** eine von der Kalibriervorrichtung (2000) umfasste Datenschnittstelle (1014) zum Übermitteln der Kalibrierdaten an eine externe Steuereinheit (5000) und/oder zum Empfangen von Steueranweisungen, insbesondere für das Erzeugen von Kalibrierdaten.

8. Kalibriervorrichtung nach Anspruch 6 oder 7,
**gekennzeichnet durch** eine von der Kalibriervorrichtung (2000) umfasste Prüfeinheit (2004) mit Qualitätsparametern für den zu justierenden Drehgeber (3000), wobei die Prüfeinheit (2004) so eingerichtet ist, dass das Drehwinkeleingangssignal des Drehgebers (3000) mittels der Qualitätsparameter bewertbar ist, wobei insbesondere eine Qualitätsinformation an die externe Steuereinheit (5000) mittels der Datenschnittstelle (1014) übertragbar ist oder eine Qualitätsinformation mittels Signalmitteln an Bedienpersonal ausgebbar ist .

9. Kalibriervorrichtung nach einem der Ansprüche 6 bis 8,
**gekennzeichnet durch** eine von der Kalibriervorrichtung (2000) umfasste mechanische Schnittstelle (1013) zum Koppeln von Antriebsmitteln zum Erzeugen einer Rotationsbewegung der Welle (3001) im Kupplungszustand und/oder von der Kalibriervorrichtung (2000) umfasste Antriebsmittel (1012) zum Erzeugen einer Rotationsbewegung der Welle (3001).

10. Kalibriervorrichtung nach einem der Ansprüche 6 bis 9,
**dadurch gekennzeichnet,**
**dass** die Datenschnittstelle (1014) zusätzlich mit den Antriebsmitteln (1012) verbindbar ist, insbesondere zum Steuern einer Rotationsbewegung der Welle (3001) oder dass die Datenschnittstelle (1014) mit einem Motor (6000) verbindbar ist, wobei der Motor (6000) eine Motorwelle sowie den zu kalibrierenden Drehgeber (3000) zum Erfassen der Rotationsbewegung der Motorwelle aufweist.

11. Justiervorrichtung (4000), die eine Kalibriervorrichtung (2000) nach einem der Ansprüche 6 bis 10 umfasst, **gekennzeichnet durch** von der Justiervorrichtung (4000) umfasste Justiermittel (4001), die so eingerichtet sind, dass die Justierdaten aus dem Drehwinkeleingangssignal, dem wenigstens einen Referenzgrobwinkelsignal und/oder dem Referenzfeinwinkelsignal bestimmbar sind,
wobei die Kommunikationsmittel (1016) so eingerichtet sind, dass die Justierdaten an den Drehgeber (3000) und/oder insbesondere an die externe Steuereinheit (5000) übertragbar sind.

## Claims

1. Angular position encoder (1) for detecting the rotation angle of a shaft (50) during a rotation about a first rotation axis (R1), the angular position encoder comprising
- a first etalon (2) having fixing means (3) which are designed such that the first etalon (2) in a fixed state is rigidly connectable to the shaft (50) and is thus indirectly mounted and rotates about the first rotation axis (R1);
- rotation angle sensor means (4) having assembly means (5) which are designed such that the rotation angle sensor means (4) in an assembled state are positionable relative to the first etalon (2),
wherein the rotation angle sensor means (4) are designed such that the first etalon (2) can be read out and at least one coarse angle signal is generatable;
- a reference encoder (6) having a self-mounted second etalon (7), connecting means (8), mounting means (9), and sensor means (10),
wherein the connecting means (8) are designed such that the self-mounted second etalon (7) at least in a coupling state is rotationally rigidly connected to the first etalon (2), wherein the second etalon (7) is rotatably mounted about a second rotation axis (R2) via the mounting means (9);
wherein the sensor means (10) are designed such that in the coupling state the second etalon (7) can be read out and a reference fine angle signal is generatable;
- correction means (11) which are designed such that a reference coarse angle signal, which is corrected by a first type of rotation angle error which in particular represents an eccentricity angle error and/or a wobble angle error of the fixed etalon in relation to the first rotation axis (R1) of the shaft (50), is determinable from the at least one coarse angle signal on the basis of a calculation specification, and
- position determination means (12) for determining and outputting a position output signal, wherein the position determination means are designed such that the position output signal is determinable from the reference fine angle signal and the reference coarse angle signal according to a further calculation specification,
**characterized**
**in that** the further calculation specification applies sensor fusion algorithms, in particular a Kalman filter, or an observer to the reference coarse angle signal and the reference fine angle signal in order to generate the position output signal or
**in that** the further calculation specification comprises the position output signal being formed from the difference between the reference fine angle signal and a filtered error signal (e_filt),
wherein the filtered error signal (e_filt) is formed by the difference between the reference fine angle signal and the reference coarse angle signal and the application of a filter or a DFT.

2. Angular position encoder according to claim 1,
**characterized**
**in that** the rotation angle sensor means (4) are designed such that at least one second coarse angle signal is generatable in order to map the rotational movement of the first etalon (2) to at least a second angular position by means of the at least one second coarse angle signal and in that the correction means (11) are designed such that the calculation specification additionally processes the at least second reference coarse angle signal during the determination of the reference coarse angle signal.

3. Angular position encoder according to claim 1 or 2,
**characterized**
**in that** the fixing means (3) are in the form of a chuck (13) or a collet for fixing the first etalon (2) on the shaft (50) and/or in that the chuck (13) or the collet is self-centering and/or in that the chuck or the collet is automatically, in particular pneumatically or electrically, operable by means of comprised actuating means.

4. Angular position encoder according to any of the preceding claims,
**characterized**
**in that** the assembly means (5) and/or the fixing means (3) are designed such that a radial distance (Ar) and an axial distance (Aa) between the first etalon (2) and the rotation angle sensor means (4) is influenceable and/or fixable.

5. Angular position encoder according to any of the preceding claims,
**characterized**
**in that** the first etalon (2) is in the form of a magnetic etalon and the rotation angle sensor means (4) are in the form of at least one magnetic-field- sensitive sensor, in particular at least one AMR and/or TMR sensor.

6. Calibration device (2000) for generating calibration data for a rotary encoder (3000) which has an etalon (3002) fixed on a shaft (3001) and detection means (3003) for reading out the etalon (3002) and is designed to generate a rotation angle signal for mapping the rotation angle during a rotational movement of the shaft (3001) about a first rotation axis (R11), the calibration device comprising
- a first etalon (102) having fixing means (103) which are designed such that the first etalon (102) in a fixed state is rigidly and thus indirectly mountedly connectable to the shaft (3001) and rotates about the first rotation axis (R11);
- rotation angle sensor means (104) having assembly means (105) which are designed such that the rotation angle sensor means (104) in an assembled state are positionable relative to the first etalon (102), wherein the rotation angle sensor means (104) are designed such that the first etalon (102) can be read out and at least one coarse angle signal is generatable;
- a reference encoder (106) having a self-mounted second etalon (107), connecting means (108), mounting means (109), and sensor means (1010), wherein the connecting means (108) are designed such that the self-mounted second etalon (107) at least in a coupling state is rotationally rigidly connected to the first etalon (102), wherein the second etalon (107) is rotatably mounted about a second rotation axis (R22) via the mounting means (109),
wherein the sensor means (1010) are designed such that in the coupling state the second etalon (107) can be read out and a reference fine angle signal is generatable;
- correction means (1011) which are designed such that a reference coarse angle signal, which is corrected by a first type of rotation angle error which in particular represents an eccentricity angle error and/or a wobble angle error of the fixed etalon in relation to the first rotation axis of the shaft, is determinable from the at least one coarse angle signal on the basis of a calculation specification;
- communication means (1016) which are connectable to the rotary encoder (3000) in terms of signals in order to receive the at least one rotation angle input signal and
- calibration means (1015) which are configured such that the calibration data are determinable from the rotation angle input signal, the at least one reference coarse angle signal, and the reference fine angle signal,
wherein the calibration means (1015) are designed such that an intermediate reference angle signal is generatable from the reference coarse angle signal and the reference fine angle signal according to a further calculation specification,
wherein the further calculation specification applies sensor fusion algorithms, in particular a Kalman filter, or an observer to the reference coarse angle signal and the reference fine angle signal in order to generate the position output signal or
wherein the further calculation specification comprises the intermediate reference angle signal being formed from the difference between the reference fine angle signal and a filtered error signal (e_filt),
wherein the filtered error signal (e_filt) is formed by the difference between the reference fine angle signal and the reference coarse angle signal and the application of a filter or a DFT,
wherein the calibration data are result from difference between the rotation angle input signal and the intermediate reference signal.

7. Calibration device according to claim 6,
**characterized by** a data interface (1014) comprised by the calibration device (2000) for transmitting the calibration data to an external control unit (5000) and/or for receiving control instructions, in particular for generating calibration data.

8. Calibration device according to claim 6 or 7,
**characterized by** a checking unit (2004) comprised by the calibration device (2000) with quality parameters for the rotary encoder (3000) to be adjusted, wherein the checking unit (2004) is configured such that the rotation angle input signal of the rotary encoder (3000) is evaluable by means of the quality parameters, wherein in particular quality information is transmittable to the external control unit (5000) by means of the data interface (1014) or quality information is outputtable to operating personnel by means of signaling means.

9. Calibration device according to any of claims 6 to 8,
**characterized by** a mechanical interface (1013) comprised by the calibration device (2000) for coupling drive means for generating a rotational movement of the shaft (3001) in the coupling state and/or drive means (1012) comprised by the calibration device (2000) for generating a rotational movement of the shaft (3001).

10. Calibration device according to any of claims 6 to 9,
**characterized**
**in that** the data interface (1014) is additionally connectable to the drive means (1012), in particular for controlling a rotational movement of the shaft (3001), or in that the data interface (1014) is connectable to a motor (6000), wherein the motor (6000) has a motor shaft and the rotary encoder (3000) to be calibrated for detecting the rotational movement of the motor shaft.

11. Adjustment device (4000) comprising a calibration device (2000) according to any of claims 6 to 10, **characterized by** adjustment means (4001) comprised by the adjustment device (4000) which are configured such that the adjustment data are determinable from the rotation angle input signal, the at least one reference coarse angle signal and/or the reference fine angle signal,
wherein the communication means (1016) are configured such that the adjustment data are transmittable to the rotary encoder (3000) and/or in particular to the external control unit (5000).

## Revendications

1. Capteur de position angulaire (1) permettant de détecter l'angle de rotation d'un arbre (50) lors d'une rotation autour d'un premier axe de rotation (R1), comprenant
- une première pièce de référence (2) comportant des moyens de fixation (3) qui sont conçus de sorte que la première pièce de référence (2), dans un état fixé, peut être reliée de manière rigide à l'arbre (50) et est ainsi montée séparément et tourne autour du premier axe de rotation (R1) ;
- des moyens formant capteur d'angle de rotation (4) comportant des moyens de montage (5) qui sont conçus de sorte que les moyens formant capteur d'angle de rotation (4) peuvent être positionnés, dans un état de montage, par rapport à la première pièce de référence (2), dans lequel les moyens formant capteur d'angle de rotation (4) sont conçus de sorte que la première pièce de référence (2) peut être lue et qu'au moins un signal d'angle approximatif peut être généré ;
- un capteur de référence (6) comportant une seconde pièce de référence (7) montée indépendamment, des moyens de liaison (8), des moyens de support (9) ainsi que des moyens formant capteur (10), dans lequel les moyens de liaison (8) sont conçus de sorte que la seconde pièce de référence (7) montée indépendamment est reliée de manière solidaire en rotation à la première pièce de référence (2) au moins dans un état d'accouplement, dans lequel la seconde pièce de référence (7) est montée de manière à pouvoir tourner autour d'un second axe de rotation (R2) par l'intermédiaire des moyens de support (9) ;
dans lequel les moyens formant capteur (10) sont configurés de sorte que, dans l'état d'accouplement, la seconde pièce de référence (7) peut être lue et un signal d'angle précis de référence peut être généré ;
- des moyens de correction (11) qui sont configurés de sorte qu'à partir de l'au moins un signal d'angle approximatif, un signal d'angle approximatif de référence peut être déterminé sur la base d'une règle de calcul, lequel est corrigé d'une erreur d'angle de rotation d'un premier type qui représente en particulier une erreur d'angle d'excentricité et/ou une erreur d'angle de nutation de la pièce de référence fixée par rapport au premier axe de rotation (R1) de l'arbre (50), et
- des moyens de détermination de position (12) permettant de déterminer et d'émettre un signal de sortie de position, dans lequel les moyens de détermination de position sont configurés de sorte que le signal de sortie de position peut être déterminé à partir du signal d'angle précis de référence et du signal d'angle approximatif de référence conformément à une autre règle de calcul,
**caractérisé en ce**
**que** l'autre règle de calcul applique des algorithmes de fusion de capteurs, en particulier un filtre de Kalman, ou un observateur, au signal d'angle approximatif de référence et au signal d'angle précis de référence afin de générer le signal de sortie de position, ou
**que** l'autre règle de calcul comprend le fait que le signal de sortie de position est formé à partir de la différence entre le signal d'angle précis de référence et un signal d'erreur filtré (e_filt), dans lequel le signal d'erreur filtré (e_filt) est obtenu à partir de la différence entre le signal d'angle précis de référence et le signal d'angle approximatif de référence et de l'application d'un filtre ou d'une TFD.

2. Capteur de position angulaire selon la revendication 1,
**caractérisé en ce**
**que** les moyens formant capteur d'angle de rotation (4) sont configurés de sorte qu'au moins un second signal d'angle approximatif peut être généré afin de représenter le mouvement de rotation de la première pièce de référence (2) dans au moins une seconde position angulaire à l'aide de l'au moins un second signal d'angle approximatif, et que les moyens de correction (11) sont configurés de sorte que la règle de calcul traite en outre l'au moins second signal d'angle approximatif de référence lors de la détermination du signal d'angle approximatif de référence.

3. Capteur de position angulaire selon la revendication 1 ou 2,
**caractérisé en ce**
**que** les moyens de fixation (3) sont conçus sous la forme d'un mandrin (13) ou d'une pince de serrage destiné à fixer la première pièce de référence (2) sur l'arbre (50) et/ou que le mandrin (13) ou la pince de serrage est conçu de manière à être autocentrant et/ou que le mandrin ou la pince de serrage peut être actionné automatiquement, en particulier par voie pneumatique ou électrique, au moyen de moyens de réglage fournis.

4. Capteur de position angulaire selon l'une des revendications précédentes,
**caractérisé en ce**
**que** les moyens de montage (5) et/ou les moyens de fixation (3) sont conçus de sorte qu'un écartement radial (Ar) et un écartement axial (Aa) entre la première pièce de référence (2) et les moyens formant capteur d'angle de rotation (4) peuvent être modifiés et/ou fixés.

5. Capteur de position angulaire selon l'une des revendications précédentes,
**caractérisé en ce**
**que** la première pièce de référence (2) est conçue comme une pièce de référence magnétique et les moyens formant capteur d'angle de rotation (4) sont conçus en tant qu'au moins un capteur sensible au champ magnétique, en particulier en tant qu'au moins un capteur AMR et/ou TMR.

6. Dispositif d'étalonnage (2000) permettant de générer des données d'étalonnage pour un capteur rotatif (3000) qui présente une pièce de référence (3002) fixée sur un arbre (3001) et des moyens de détection (3003) permettant de lire la pièce de référence (3002) et est configuré pour générer un signal d'angle de rotation pour la représentation de l'angle de rotation lors d'un mouvement de rotation de l'arbre (3001) autour d'un premier axe de rotation (R11), comprenant
- une première pièce de référence (102) comportant des moyens de fixation (103) qui sont conçus de sorte que la première pièce de référence (102), lorsqu'elle est dans un état fixé, peut être reliée de manière rigide à l'arbre (3001) et donc être montée séparément et tourne autour du premier axe de rotation (R11) ;
- des moyens formant capteur d'angle de rotation (104) comportant des moyens de montage (105) qui sont conçus de sorte que les moyens formant capteur d'angle de rotation (104) peuvent être positionnés, dans un état de montage, par rapport à la première pièce de référence (102), dans lequel les moyens formant capteur d'angle de rotation (104) sont configurés de sorte que la première pièce de référence (102) peut être lue et qu'au moins un signal d'angle approximatif peut être généré ;
- un capteur de référence (106) comportant une seconde pièce de référence (107) montée indépendamment, des moyens de liaison (108), des moyens de support (109) ainsi que des moyens formant capteur (1010), dans lequel les moyens de liaison (108) sont conçus de sorte que la seconde pièce de référence (107) montée indépendamment est reliée de manière solidaire en rotation à la première pièce de référence (102) au moins dans un état d'accouplement, dans lequel la seconde pièce de référence (107) est montée de manière à pouvoir tourner autour d'un second axe de rotation (R22) par l'intermédiaire des moyens de support (109), dans lequel les moyens formant capteur (1010) sont configurés de sorte que, dans l'état d'accouplement, la seconde pièce de référence (107) peut être lue et un signal d'angle précis de référence peut être généré ;
- des moyens de correction (1011) qui sont configurés de sorte qu'à partir de l'au moins un signal d'angle approximatif, un signal d'angle approximatif de référence peut être déterminé sur la base d'une règle de calcul, lequel est corrigé d'une erreur d'angle de rotation d'un premier type qui représente en particulier une erreur d'angle d'excentricité et/ou une erreur d'angle de nutation de la pièce de référence fixée par rapport au premier axe de rotation de l'arbre ;
- des moyens de communication (1016) qui peuvent être connectés au capteur rotatif (3000) par signaux afin de recevoir l'au moins un signal d'entrée d'angle de rotation et
- des moyens d'étalonnage (1015) qui sont configurés de sorte que les données d'étalonnage peuvent être déterminées à partir du signal d'entrée d'angle de rotation, de l'au moins un signal d'angle approximatif de référence et du signal d'angle précis de référence,
dans lequel les moyens d'étalonnage (1015) sont configurés de sorte qu'un signal d'angle de référence intermédiaire peut être généré à partir du signal d'angle de référence approximatif et du signal d'angle de référence précis conformément à une autre règle de calcul, dans lequel l'autre règle de calcul applique des algorithmes de fusion de capteurs, en particulier un filtre de Kalman, ou un observateur, au signal d'angle de référence approximatif et au signal d'angle de référence précis afin de générer le signal de sortie de position, ou dans lequel l'autre règle de calcul comprend le fait que le signal d'angle de référence intermédiaire est formé à partir de la différence entre le signal d'angle de référence précis et un signal d'erreur filtré (e_filt),
dans lequel le signal d'erreur filtré (e_filt) est formé par la différence entre le signal d'angle précis de référence et le signal d'angle approximatif de référence, et par l'application d'un filtre ou d'une TFD, dans lequel les données d'étalonnage résultent de la différence entre le signal d'entrée d'angle de rotation et le signal de référence intermédiaire.

7. Dispositif d'étalonnage selon la revendication 6,
**caractérisé par** une interface de données (1014) fournie par le dispositif d'étalonnage (2000) pour la transmission des données d'étalonnage à une unité de commande externe (5000) et/ou pour la réception d'instructions de commande, en particulier pour la génération de données d'étalonnage.

8. Dispositif d'étalonnage selon la revendication 6 ou 7,
**caractérisé par** une unité de vérification (2004) fournie par le dispositif d'étalonnage (2000) et comportant des paramètres de qualité pour le capteur rotatif (3000) à ajuster, dans lequel l'unité de vérification (2004) est configurée de sorte que le signal d'entrée d'angle de rotation du capteur rotatif (3000) peut être évalué à l'aide des paramètres de qualité, dans lequel, en particulier, des informations de qualité peuvent être transmises à l'unité de commande externe (5000) au moyen de l'interface de données (1014) ou des informations de qualité peuvent être transmises au personnel de service au moyen de moyens de signalisation.

9. Dispositif d'étalonnage selon l'une des revendications 6 à 8,
**caractérisé par** une interface mécanique (1013) fournie par le dispositif d'étalonnage (2000) et permettant d'accoupler des moyens d'entraînement pour générer un mouvement de rotation de l'arbre (3001) dans l'état d'accouplement et/ou des moyens d'entraînement (1012) fournis par le dispositif d'étalonnage (2000) pour générer un mouvement de rotation de l'arbre (3001).

10. Dispositif d'étalonnage selon l'une des revendications 6 à 9, **caractérisé en ce**
**que** l'interface de données (1014) peut en outre être connectée aux moyens d'entraînement (1012), en particulier pour commander un mouvement de rotation de l'arbre (3001), ou que l'interface de données (1014) peut être connectée à un moteur (6000), dans lequel le moteur (6000) présente un arbre de moteur ainsi que le capteur rotatif (3000) à étalonner pour détecter le mouvement de rotation de l'arbre de moteur.

11. Dispositif d'ajustage (4000) comprenant un dispositif d'étalonnage (2000) selon l'une des revendications 6 à 10, **caractérisé par** des moyens d'ajustage (4001) fournis par le dispositif d'ajustage (4000) qui sont configurés de sorte que les données d'ajustage peuvent être déterminées à partir du signal d'entrée d'angle de rotation, de l'au moins un signal d'angle approximatif de référence et/ou du signal d'angle précis de référence, dans lequel les moyens de communication (1016) sont configurés de sorte que les données d'ajustage peuvent être transmises au capteur rotatif (3000) et/ou, en particulier, à l'unité de commande externe (5000).
